# EUROPÄISCHE PATENTANMELDUNG

(11) **EP 4 779 419 A1**
(43) Veröffentlichungstag der Anmeldung: **22.07.2026**
(21) Anmeldenummer: 25151955.9
(22) Anmeldetag: 15.01.2025
(51) Int. Cl.: G05B 19/4061, F16P 3/14, G01S 17/00

(54) **BEARBEITUNGSVORRICHTUNG MIT BARRIEREFREIEM SICHERHEITSBEREICH**

(71) Anmelder: Kolb Design Technology GmbH & Co. KG, 94469 Deggendorf (DE)
(72) Erfinder: Süß, Josef, 94469 Deggendorf (DE)
(74) Vertreter: Eisenführ Speiser

(57) **Zusammenfassung**

Die Erfindung betrifft eine Bearbeitungsvorrichtung (1) für Modelle (14) aufweisend: einen Arbeitsbereich (4), der barrierefrei und zumindest in einem Abschnitt von außen zugänglich ist; eine Arbeitseinrichtung (6), eine Überwachungseinrichtung (8) zum Überwachen des Arbeitsbereichs (4) und eine Steuerung (10), wobei die Steuerung (10) dazu ausgebildet ist, unter Verwendung der Überwachungseinrichtung (8) im Arbeitsbereich (4) befindliche Personen (38) zu erkennen, zumindest einen ersten Sicherheitsbereich (12a) um zumindest einen Abschnitt der Arbeitseinrichtung (6) herum zu definieren, und einen Sicherheitshalt der Arbeitseinrichtung (6) zu veranlassen, falls sich eine Person (38) im ersten Sicherheitsbereich (12a) befindet. Ferner betrifft die Erfindung ein Bearbeitungssystem (100) und ein Überwachungssystem.

## Beschreibung

Die Erfindung betrifft eine Bearbeitungsvorrichtung, insbesondere Fräsmaschine, zur Erstellung, Erkennung und/oder Bearbeitung von Modellen; die Bearbeitungsvorrichtung aufweisend: einen Arbeitsbereich, in dem zumindest ein zu bearbeitendes Modell angeordnet werden und/oder in dem ein Modell aufgebaut werden kann, zumindest eine Arbeitseinrichtung zum Bearbeiten des Modells, zum Erkennen des Modells und/oder zum Aufbauen des Modells mittels eines Werkzeugs, wobei die Arbeitseinrichtung dazu ausgebildet ist, sich zumindest abschnittsweise durch den Arbeitsbereich zu bewegen.

Während der Entwicklung neuer Produktdesigns, z.B. in der Automobilindustrie, werden Modelle verwendet. Solche Modelle können insbesondere Designmodelle sein, die beispielsweise zum Beurteilen der Ästhetik eines in Entwicklung befindlichen Produkts verwendet werden können. Die Modelle werden häufig aus sogenanntem Clay hergestellt und daher auch als Clay-Modelle bezeichnet. Clay (auch Industrieplastilin genannt) ist eine verformbare Modelliermasse. Ein anderer Anwendungsfall sind Modelle für strömungsmechanische Untersuchungen, insbesondere Windkanalmodelle. Modelle aus Clay werden insbesondere in frühen Phasen der Produktentwicklung eingesetzt, um schnell einen ersten Entwurf eines neuen Designs oder einen Eindruck einer Designänderung zu erhalten. In diesen Phasen treten Design-Iterationen in kurzer Zeit auf. In einem ersten Schritt zum Erstellen eines Modells anhand einer vorgegebenen Zeichnung oder CAD-Datei wird in der Regel ein Unterbau, welcher die grobe Struktur des Modells wiedergibt, bereitgestellt. Der Unterbau kann beispielsweise aus Holz oder Stahl gebildet sein. Auf diesen Unterbau werden meist Abdeckplatten angebracht. Als oberste Schicht, die dann die Kontur des späteren Produkts darstellt, wird eine mehrere Zentimeter dicke Schicht Clay oder eine andere Modelliermasse aufgetragen. Der Clay kann nun manuell, bzw. unter Zuhilfenahme von Modellierwerkzeugen, etwa Messern, Fräsern, Hobeln oder Bohrern entsprechend den zugrundeliegenden Designentwürfen geformt werden. Alternativ kann der Clay auch maschinell bearbeitet werden. Als Alternative zu Clay-Modellen werden häufig auch Kunststoff-Modelle eingesetzt. Diese haben jedoch den Nachteil, dass, anders als bei Clay, ein Materialauftrag nur schwer möglich ist.

Bei der maschinellen Bearbeitung von Modellen verfährt eine Bearbeitungsvorrichtung, beispielsweise eine CNC-Maschine mit entsprechenden Werkzeugen, derart, dass das Modell geformt wird. Insbesondere können computergesteuerte Maschinen die Form eines virtuellen Modells, insbesondere eines CAD-Modells nachbilden. Alternativ wird ein Modell additiv aus Clay oder einer anderen Modelliermasse gefertigt. Zudem können additive und subtraktive Fertigungsschritte beim Erstellen von Modellen auch kombiniert werden. Um auch komplexe Geometrien und Freiformen zu modellieren, weist eine Bearbeitungsvorrichtung zum Erstellen, Erkennen oder Bearbeiten von Modellen häufig mehrere translatorische und/oder rotatorische Freiheitsgrade zum Bewegen der Werkzeuge auf.

Aus Gründen der Arbeitssicherheit muss ein Arbeitsbereich der Maschine, in dem sich Teile rotatorisch und/oder translatorisch bewegen, gegenüber der Umgebung und insbesondere gegenüber Bedienpersonal abgegrenzt sein. Bei vorbekannten Fräsmaschinen wird dies meist durch Abtrennungen des Arbeitsbereichs von der Umgebung, etwa durch ein Gehäuse, Gitter, Zutrittsbarrieren oder Lichtschranken, realisiert. Nachteilig ist hierbei, dass die Zugänglichkeit zum gesamten Arbeitsbereich eingeschränkt ist.

Erst nach Abschluss des - teils langen - Fertigungsprozesses können Details des Modells untersucht werden. Gegebenenfalls kann der Fertigungsprozess auch zum Untersuchen des Modells unterbrochen werden, wodurch jedoch die Bearbeitungszeit insgesamt erhöht wird. Diese unflexible Lösung ist daher nicht zeiteffizient. Gerade in den schnelllebigen frühen Phasen der Produktentwicklung mit hohen Iterationsgeschwindigkeiten ist dies nachteilig. Ferner behindern Abtrennungen des Arbeitsbereichs eine allseitige Ansicht des Modells auch nach der Bearbeitung. Es besteht deshalb Bedarf, bestehende Bearbeitungsvorrichtungen zum Erstellen, Erkennen und/oder Bearbeiten von Modellen weiterzuentwickeln.

Eine Aufgabe der vorliegenden Erfindung ist es, diese Nachteile zu überwinden und eine flexibler zugängliche Bearbeitungsvorrichtung bereitzustellen.

Die Aufgabe wird in einem ersten Aspekt der Erfindung durch eine Bearbeitungsvorrichtung mit den Merkmalen des unabhängigen Anspruchs 1 gelöst.

Eine erfindungsgemäße Bearbeitungsvorrichtung, insbesondere Fräsmaschine, zur Erstellung, Erkennung und/oder Bearbeitung von Modellen weist auf: Einen Arbeitsbereich, in dem zumindest ein zu bearbeitendes Modell angeordnet werden und/oder in dem ein Modell aufgebaut werden kann, wobei der Arbeitsbereich zumindest in einem Abschnitt barrierefrei von außen zugänglich ist; zumindest eine Arbeitseinrichtung zum Bearbeiten des Modells, zum Erkennen des Modells und/oder zum Aufbauen des Modells mittels eines Werkzeugs, wobei die Arbeitseinrichtung dazu ausgebildet ist, sich zumindest abschnittsweise durch den Arbeitsbereich zu bewegen, eine Überwachungseinrichtung zum Überwachen des Arbeitsbereichs, und eine Steuerung, wobei die Steuerung dazu ausgebildet ist, unter Verwendung der Überwachungseinrichtung im Arbeitsbereich befindliche Personen zu erkennen, zumindest einen ersten Sicherheitsbereich um zumindest einen Abschnitt der Arbeitseinrichtung herum zu definieren und einen Sicherheitshalt der Arbeitseinrichtung zu veranlassen, falls sich eine Person im ersten Sicherheitsbereich befindet.

Eine Bearbeitungsvorrichtung entfernt bevorzugt Material des Modells, insbesondere durch Fräsen und/oder Bohren. Gleichermaßen ist bevorzugt, dass die Bearbeitungsvorrichtung Material additiv zusammensetzt und/oder aufträgt und so das Modell formt. Alternativ oder ergänzend kann die Bearbeitungsvorrichtung dazu ausgebildet sein, das Modell zu erkennen. Beim Erkennen erzeugt die Bearbeitungsvorrichtung also ein virtuelles Modell, insbesondere dreidimensionales Modell, aus einem physischen Modell. Hierfür kann die Bearbeitungsvorrichtung beispielsweise ein Erfassungswerkzeug aufweisen. Es soll verstanden werden, dass die erfindungsgemäße Bearbeitungsvorrichtung nur zum Erstellen (insbesondere durch Abtragen von Material), nur zum Erzeugen (insbesondere durch Materialauftrag) oder nur zum Erfassen eines Modells ausgebildet sein kann. Die Bearbeitungsvorrichtung kann aber auch dazu vorgesehen sein, Modelle zu erstellen, zu erfassen und/oder zu erzeugen. In diesem Fall können beispielswiese mehrere Werkzeuge vorgesehen sein und/oder das Werkzeug kann auswechselbar sein.

Die Form des Modells wird bevorzugt als virtuelles Modell, insbesondere CAD-Modell bereitgestellt. Alternativ oder zusätzlich ist vorgesehen, dass die Bearbeitungsvorrichtung dazu ausgebildet ist, das Modell zu erkennen, etwa, um aus den realen Geometriedaten des Modells ein virtuelles Modell, z.B. ein CAD-Modell zu erstellen.

Die Bearbeitungsvorrichtung weist ein Werkzeug auf. Ein derartiges Werkzeug ist insbesondere ein Fräskopf, ein Bohrer, ein Messer, ein Stichel, ein Schaber oder dergleichen. Für additiv auftragende Bearbeitungsvorrichtungen ist ein Werkzeug eine Auftragseinheit, insbesondere eine Materialdüse. Wenn die Bearbeitungsvorrichtung dazu ausgebildet ist, das Modell zu erkennen, ist das Werkzeug ein Messwerkzeug, etwa ein Tastelement, ein Abstandsmessgerät, eine Kamera, ein Laserscanner oder dergleichen. Es ist ebenso möglich und bevorzugt, dass eine Bearbeitungsvorrichtung mehrere der oben genannten Werkzeuge aufweist und/oder mehrere Werkzeuge gegeneinander austauschbar sind.

Die Arbeitseinrichtung umfasst das Werkzeug. Die Arbeitseinrichtung ist dazu ausgebildet, sich zumindest abschnittsweise durch einen Arbeitsbereich zu bewegen. Eine Bewegung der Arbeitseinrichtung kann entlang translatorischer Achsen und/oder durch Drehen um rotatorische Achsen erfolgen. Der Arbeitsbereich ist derjenige Bereich, in dem ein zu bearbeitendes und/oder zu erfassendes Modell angeordnet ist und/oder in dem ein zu erstellendes Modell erstellt werden kann. Der Arbeitsbereich ist also ein Volumenbereich, z.B. innerhalb einer Werkhalle. Vereinfachend kann aber auch eine Projektion des Arbeitsbereichs auf den Boden als Arbeitsbereich bezeichnet werden. Dies ist insbesondere dann vorteilhaft, wenn die Abmessungen des Arbeitsbereichs in der Höhe konstant sind. Beispielsweise kann sich der Arbeitsbereich bis zu einer vordefinierten Höhe von einer Grundfläche senkrecht nach oben erstrecken. Innerhalb des Arbeitsbereichs wird ein Modell additiv und/oder subtraktiv gefertigt und/oder erkannt. Die Arbeitseinrichtung kann sich teilweise oder vollständig im Arbeitsbereich oder in der Umgebung des Arbeitsbereichs befinden. Vorzugsweise kann sich die Arbeitseinrichtung zumindest abschnittsweise durch den Arbeitsbereich bewegen. So können verschiedene Geometrieabschnitte des Modells durch das Werkzeug bearbeitet werden. Vorzugsweise ist der Arbeitsbereich der gesamte Bereich der Bearbeitungsvorrichtung, den die Arbeitseinrichtung bzw. ein Teil der Arbeitseinrichtung erreichen kann.

Der Arbeitsbereich ist von außen, also von einem außerhalb des Arbeitsbereichs liegenden Bereich, zumindest in einem Abschnitt barrierefrei zugänglich. Barrieren sind hierbei Einrichtungen, die einen Zugang des Arbeitsbereichs im Betrieb verhindern und/oder den Betrieb stoppen, wenn derartige Barrieren überwunden werden. In vorbekannten Bearbeitungsvorrichtungen sind Barrieren physische Barrieren. Eine Barriere kann also eine physisch-konstruktive Abtrennung des Arbeitsbereichs gegenüber der Umgebung sein. Alternativ oder ergänzend kann eine Barriere eine Lichtschranke sein oder umfassen, die dazu vorgesehen ist, den Betrieb der Bearbeitungsvorrichtung zu unterbrechen, falls sie unterbrochen wird. Häufig werden auch physische Barrieren, wie beispielsweise Trennwände, mit Lichtschranken oder Kontaktschaltern kombiniert. Im allgemeinen Sprachgebrauch meint der Begriff der Barrierefreiheit, dass eine Zugänglichkeit und/oder Bedienbarkeit auch für Menschen mit Einschränkungen möglich ist. Vorliegend bezieht sich der Begriff "barrierefrei" jedoch insbesondere darauf, dass ein Arbeitsbereich ohne die Überwindung physischer Barrieren und/oder von Lichtschranken zugänglich ist. Vorzugsweise wird eine Bearbeitung eines Modells bei Übertreten der Grenze zum Arbeitsbereich nicht gestoppt. Eine physische Barriere ist dabei eine Barriere die von einer Durchschnittsperson nur mit erheblichem Aufwand überwunden werden kann. Ein Beispiel für eine solche Barriere ist eine Trennwand. Es soll jedoch verstanden werden, dass ein barrierefrei zugänglicher Arbeitsbereich auch eine oder mehrere Stufen oder Podeste aufweisen kann. Beispielsweise kann der Arbeitsbereich ein gegenüber der Umgebung erhöhtes Podest sein.

Eine erfindungsgemäße Bearbeitungsvorrichtung umfasst ferner eine Überwachungseinrichtung zum Überwachen des Arbeitsbereichs und eine Steuerung. Unter Verwendung der Überwachungseinheit und der Steuerung können im Arbeitsbereich befindliche Personen erkannt werden. Es soll verstanden werden, dass sich eine Person vorzugsweise nicht vollständig im Arbeitsbereich aufhalten muss, um von der Steuerung unter Verwendung der Überwachungseinrichtung als Person erkannt zu werden. Vielmehr können auch Körperteile oder an der Person befindliche Ausrüstungsgegenstände innerhalb des Arbeitsbereichs als Person erkannt werden, etwa, wenn eine Person mit dem Arm in den Arbeitsbereich hineingreift, teilweise in den Arbeitsbereich hineintritt oder Arbeitsgeräte in den Arbeitsbereich hineinhält. Die Steuerung kann insbesondere ein Computer, ein Mikrocontroller, ein Server, ein dezentrales Netzwerk oder dergleichen sein oder umfassen. Die Überwachungseinrichtung ist vorzugsweise zum Erfassen von Umgebungsinformationen ausgebildet. Bevorzugt ist oder umfasst die Überwachungseinrichtung eine oder mehrere Kameras, einen oder mehrere Radarsensoren, einen oder mehrere Lidarsensoren und/oder einen oder mehrere Ultraschallsensoren. Die Steuerung ist bevorzugt dazu ausgebildet, die Position einer im Arbeitsbereich erkannten Person zu ermitteln. Die Steuerung kann einen Computer, einen Prozessor, einen Mikroprozessor, einen Server, ein Netzwerk von mehreren Recheneinheiten und/oder dergleichen umfassen.

Die Steuerung ist dazu ausgebildet einen ersten Sicherheitsbereich zu definieren, insbesondere um einen Abschnitt der Arbeitseinrichtung herum zu definieren. Der Sicherheitsbereich ist vorzugsweise ein Raumvolumen und/oder eine Projektion auf den Boden. So kann der erste Sicherheitsbereich ein Raumvolumen um einen Abschnitt der Bearbeitungsvorrichtung und/oder eine Fläche sein, die um eine Projektion der Arbeitseinrichtung auf den Boden definiert ist. Der Abschnitt der Arbeitseinrichtung umfasst besonders bevorzugt das Werkzeug. Werkzeuge, wie beispielsweise Fräser, bergen ein sehr hohes Verletzungsrisiko, sodass der Kontakt zwischen solchen Werkzeugen und Personen stets verhindert sein muss. Der Abschnitt der Arbeitseinrichtung kann aber beispielsweise auch einen beweglichen Teil der Arbeitseinrichtung umfassen, da auch Kollisionen zwischen stumpfen Objekten und Personen erhebliche Verletzungen verursachen können.

Die Steuerung ist dazu ausgebildet, einen Sicherheitshalt und/oder einen Sicherheitsstopp der Arbeitseinrichtung zu veranlassen, falls sich eine Person im Sicherheitsbereich befindet. Die Steuerung stoppt die Arbeitseinrichtung also bevorzugt dann, wenn sich eine unter Verwendung der Überwachungseinrichtung erkannte und von der Steuerung identifizierte Person in dem von der Steuerung definierten Sicherheitsbereich befindet. Ein Stoppen der Arbeitseinrichtung ist das Abbremsen aller rotatorisch und/oder translatorisch bewegten Teile der Bearbeitungsvorrichtung bis zum Stillstand. Nach einem Sicherheitshalt kann eine Arbeitseinrichtung ohne gesonderte Freigabe durch einen menschlichen Benutzer erneut angefahren werden. Nach einem Sicherheitsstopp, der auch als Nothalt bezeichnet wird, ist vor einem erneuten Anfahren der Arbeitseinrichtung eine manuelle Freigabe erforderlich.

In einem ersten bevorzugten Ausführungsbeispiel ist die Steuerung dazu ausgebildet, unter Verwendung der Überwachungseinrichtung das im Arbeitsbereich befindliche Modell zu erkennen und eine Kollision der Arbeitseinrichtung mit dem Modell zu verhindern. Erkennen meint, die räumliche Anordnung des Modells, insbesondere relativ zu Elementen der Bearbeitungsvorrichtung zu erfassen. Eine Kollision ist ein unbeabsichtigtes Aufeinandertreffen von Elementen der Bearbeitungsvorrichtung und Bereichen des Modells. Das Berühren des Modells mittels eines Werkzeugs zum Bearbeiten des Modells ist geplant und deswegen keine Kollision. Vorteilhafterweise wird durch eine derartige Weiterbildung der Bearbeitungsvorrichtung verhindert, dass Elemente der Bearbeitungsvorrichtung unbeabsichtigt mit dem Modell kollidieren und dieses beschädigen. Dies kann insbesondere vorteilhaft sein, wenn ein Rohling eines Modells mit nur ungenügend bekannten und/oder zu großen Abmessungen in den Arbeitsbereich eingebracht wird.

In einer bevorzugten Weiterbildung ist die Arbeitseinrichtung mehrachsig entlang einer ersten Bewegungsachse und entlang einer zweiten Bewegungsachse durch den Arbeitsbereich bewegbar. Die erste Achse ist bevorzugt eine erste horizontale Achse. Die zweite Achse ist vorzugsweise eine vertikale Achse. Es ist ebenso bevorzugt, dass beide Achsen horizontale Achsen sind und/oder dass die erste Achse eine vertikale Achse ist. Bevorzugt sind die Achsen zueinander orthogonal angeordnet. Es kann auch vorgesehen sein, dass wenigstens eine der beiden Bewegungsachsen eine Rotationsachse ist oder umfasst. Die Arbeitseinrichtung weist bevorzugt weitere translatorische und/oder rotatorische Achsen auf. Vorteilhafterweise kann eine größere Vielzahl an Geometrien, Oberflächen und Formen des Modells bearbeitet, erkannt und/oder aufgebaut werden. Besonders bevorzugt ist die Arbeitseinrichtung so ausgebildet, dass das Werkzeug dreidimensional im Arbeitsbereich bzw. durch den Arbeitsbereich bewegbar ist. Alternativ oder ergänzend kann die Arbeitseinrichtung so ausgebildet sein, dass das Werkzeug um zumindest eine Rotationsachse um 180°, vorzugsweise 360°, drehbar ist.

In einer bevorzugten Variante ist die Überwachungseinrichtung dazu vorgesehen, stationär montiert zu werden und vorzugsweise den gesamten Arbeitsbereich abzudecken. Stationär meint hierbei, dass die Überwachungseinrichtung ortsfest angebracht ist. Es soll verstanden werden, dass die Überwachungseinrichtung gegenüber dem Arbeitsbereich und der Bearbeitungsvorrichtung stationär montiert ist. Innerhalb der Überwachungseinrichtung können aber Komponenten, wie beispielsweise Spiegel, Linsen, Laserquellen oder dergleichen, bewegt werden. Eine stationär montierte Überwachungseinrichtung ist vorteilhafterweise einfacher einrichtbar als eine nicht-stationär montierte Überwachungseinrichtung. Das Programmieren einer derartigen Überwachungseinrichtung kann gegenüber einer nicht stationär montierten Überwachungseinrichtung vereinfacht sein. Positionsdaten können gegebenenfalls leichter ermittelt werden, da sich die Koordinaten der Überwachungseinrichtung selbst relativ zum Arbeitsbereich nicht verändern.

Es ist ferner bevorzugt, dass die Arbeitseinrichtung einen Turm aufweist, der das zum Bearbeiten, Erkennen und/oder Aufbauen des Modells vorgesehene Werkzeug zumindest mittelbar trägt. Das Werkzeug ist vorzugsweise an einem ersten Endbereich eines Werkzeugarms der Arbeitseinrichtung vorgesehen, wobei der Werkzeugarm in zumindest einer Achsrichtung beweglich von dem Turm getragen wird. Der Turm trägt das Werkzeug unmittelbar, wenn das Werkzeug direkt (ohne Zwischenelemente) mit dem Turm verbunden ist. Das Werkzeug wird hingegen mittelbar von dem Turm getragen, wenn ein Zwischenelement (wie beispielsweise der Werkzeugarm) zwischen dem Turm und dem von dem Turm getragenen Werkzeug angeordnet ist.

In und/oder an dem Turm sind vorzugsweise Maschinenelemente angebracht, etwa eine Antriebsmechanik und/oder-steuerung zum Antreiben des Werkzeugs und/oder ein Werkzeugrevolver zum Wechseln von Werkzeug. Bevorzugt wirkt die Strukturmechanik des Turms versteifend. Vorteilhafterweise werden Schwingungen so gedämpft und/oder vermieden. Vorzugsweise ist der Werkzeugarm in wenigstens einer Achsrichtung relativ zum Turm beweglich. Der Werkzeugarm kann insbesondere relativ zum Turm schwenkbar und/oder translatorisch bewegbar sein. Vorteilhafterweise weist die Maschine so einen zusätzlichen Freiheitsgrad auf und komplexere Formen sind formbar. Es soll verstanden werden, dass das Verfahren des Werkzeugarms am Turm eine Bewegung der Arbeitseinrichtung entlang einer Achse sein kann, auch wenn nur ein Teil der Arbeitseinrichtung relativ zu einem anderen Teil der Arbeitseinrichtung bewegt wird. Eine Bewegung der Arbeitseinrichtung in einer Raumrichtung ist also nicht zwingend eine Bewegung der gesamten Arbeitseinrichtung. Eine Bewegung der Arbeitseinrichtung kann insbesondere auch eine Bewegung des Werkzeugs sein.

Bevorzugt ist die Überwachungseinrichtung eine dynamische Überwachungseinrichtung, die vorzugsweise dazu ausgebildet ist, sich gleichlaufend mit der Arbeitseinrichtung zu bewegen. Eine dynamische Überwachungseinrichtung ist beweglich. Positionskoordinaten der Überwachungseinrichtung können sich im Betrieb ändern. Vorzugsweise ist ein Abstand der Überwachungseinrichtung zur Arbeitseinrichtung und/oder einer Referenzkomponente der Arbeitseinrichtung im Betrieb konstant oder annähernd konstant. Ein annähernd konstanter Abstand schwankt im Betrieb um maximal 15%, vorzugsweise maximal 5%, eines Ausgangswertes im Stillstand. Somit ist ein konstanteres Bestimmen der Position der Arbeitseinrichtung während des Betriebs möglich. Insbesondere kommt es vorteilhafterweise nicht zu Messunschärfen, wenn sich etwa die Arbeitseinrichtung räumlich von der Überwachungseinrichtung entfernt.

Besonders bevorzugt ist die Überwachungseinrichtung an dem Turm angeordnet. Bei Verfahren des Turms und des am Turm angeordneten Werkzeugs entlang einer Achse bewegt sich vorteilhafterweise so auch die Überwachungseinrichtung in dieselbe Richtung. Vorteilhafterweise ist die Überwachungseinrichtung somit stets nahe der Arbeitseinrichtung angeordnet. Ein zuverlässigeres Messen der Position der Arbeitseinrichtung kann ermöglicht werden. Außerdem können Kabelbäume, die Kabel an den Turm führen, beispielsweise zur Energieversorgung und/oder zum Steuern von Turm und/oder Werkzeug, zusätzlich Kabel zur Energieversorgung und/oder zur Datenübertragung der Überwachungseinrichtung fassen. Das spart vorteilhafterweise Bauraum.

Es ist bevorzugt, dass die Überwachungseinrichtung eine Kamera ist. Die Kamera kann mit einer Bildverarbeitungseinheit verbunden sein, die dazu ausgebildet ist, Personen und/oder Körperteile und/oder Gegenstände an Personen zu erkennen. Beispielsweise kann die Bildverarbeitungseinheit ein Rechner oder ein Mikrocontroller sein, auf dem vorzugsweise ein Bildverarbeitungsprogramm ausgeführt wird. Die Bildverarbeitungseinheit kann insbesondere Teil der Steuerung sein. In dem Fall, dass sich eine Person oder ein Körperteil im Erfassungsbereich befindet, wird dann bevorzugt der betroffene Teil des Erfassungsbereichs in einer Bildausgabe gekennzeichnet. So kann vorteilhafterweise schnell überprüft werden, an welcher Stelle des Arbeitsbereichs ein Eintritt in den Bereich registriert wurde. Es soll jedoch verstanden werden, dass auch auf eine Bildausgabe verzichtet werden kann. Beispielsweise kann die Steuerung allein unter Verwendung von Daten der Bildverarbeitungseinheit einen Sicherheitshalt veranlassen. Bevorzugt gibt die Kamera ein kontinuierliches Bild aus. Vorteilhafterweise kann so während des Bearbeitungsprozesses anhand des Kamerabildes eine zusätzliche Perspektive auf das Modell dargestellt und das Design bereits während des Fertigungsprozesses beurteilt werden und/oder eine Kontrolle durch menschliches Sicherheitspersonal wird ermöglicht.

Besonders bevorzugt ist die Kamera an einer Spitze des Turms angeordnet. Vorteilhafterweise erfasst die Kamera so einen weiten Bereich des Arbeitsbereichs, insbesondere den gesamten Arbeitsbereich. Außerdem ist an einer derartigen Ausführungsform vorteilhaft, dass Bilder des Modells bei einem hohen Turm aus einer Vogelperspektive aufgenommen werden können, die das Bedienpersonal andernfalls nur aufwändig erhalten könnte.

Bevorzugt weist die Überwachungseinrichtung zumindest zwei Kameras mit überlappenden Erfassungsbereichen auf. Zwei Kameras erleichtern das Ermitteln von räumlicher Tiefeninformationen über das Modell. Insbesondere kann die Steuerung dazu ausgebildet sein, unter Verwendung der zwei Kameras die Position einer Person im Arbeitsbereich zu ermitteln. Die Verwendung von mehr als einer Kamera kann die Genauigkeit beim Ermitteln der Position erheblich verbessern, beispielsweise indem trigonometrische Berechnungen zum Bestimmen von Positionsdaten des Modells nach dem Prinzip der Triangulation vorgenommen werden.

Besonders bevorzugt sind die Kameras dazu ausgebildet, die Arbeitseinrichtung vollumfänglich zu überwachen und/oder den Arbeitsbereich (oder dessen zweidimensionale Projektion auf den Boden) vollständig zu erfassen. Vorteilhafterweise gibt es so keine Totbereiche im Arbeitsbereich und/oder an der Arbeitseinrichtung, in denen keine Überwachung stattfindet und ein Eindringen von Personen, Körperteilen und/oder Gegenständen in den Arbeitsbereich und/oder in einen Bereich nahe der Arbeitseinrichtung nicht erfasst wird. Es kann aber auch vorgesehen sein, dass die Kameras nur dazu ausgebildet sind, Grenzen des Arbeitsbereichs vollständig zu erfassen. So kann bei geringerem Überwachungsaufwand dennoch sichergestellt werden, dass keine Personen unerkannt in den Arbeitsbereich gelangen.

Ferner bevorzugt ist die Steuerung dazu ausgebildet, die geometrische Konfiguration des ersten Sicherheitsbereichs frei zu definieren. Der erste Sicherheitsbereich ist vorzugsweise nicht identisch mit dem Arbeitsbereich. Die Steuerung kann insbesondere dazu ausgebildet sein, eine Grundfläche des ersten Sicherheitsbereichs frei zu definieren. Vorzugsweise ist die Steuerung dazu eingerichtet, den ersten Sicherheitsbereich an das Werkzeug anzupassen. Der Sicherheitsbereich kann von der Steuerung z.B. als Quader, Kugel, Zylinder oder Ellipsoid definiert werden und/oder Formen annehmen, deren Rand beispielsweise einen vorbestimmten Abstand zum Werkzeug und/oder Werkzeugarm aufweist. Wenn der Sicherheitsbereich in einer Projektion auf den Boden bzw. Untergrund definiert ist, kann der Sicherheitsbereich insbesondere kreisförmig oder rechteckig sein. Der Sicherheitsbereich kann aber in der Projektion grundsätzlich frei definiert sein. Vorzugsweise ist die Steuerung dazu ausgebildet, in einer zweidimensionalen Projektion auf den Boden als Sicherheitsbereich einen Rahmen um zumindest einen Abschnitt der Arbeitseinrichtung zu definieren. Vorteilhafterweise kann die Steuerung den Sicherheitsbereich somit derart anpassen, dass er ausreichend groß für das aktuelle Werkzeug gewählt ist. Bevorzugt ist auch, den Sicherheitsbereich derart frei zu definieren, dass für Werkzeuge mit scharfen, spitzen und/oder heißen Geometrieelementen, insbesondere Schneiden und Düsen, größere Sicherheitsbereiche gewählt werden als für Werkzeuge ohne derartige Elemente, z.B. Tastfühler.

Ferner bevorzugt ist die Steuerung dazu ausgebildet, die geometrische Konfiguration des Sicherheitsbereichs, insbesondere die Größe des Sicherheitsbereichs, im Betrieb an zumindest einen Parameter der Arbeitseinrichtung, vorzugsweise eine Vorschubgeschwindigkeit der Arbeitseinrichtung, anzupassen. Neben der Größe des Sicherheitsbereichs kann ein Anpassen der geometrischen Konfiguration auch ein Verschieben des Sicherheitsbereichs sein. Ein solches Verschieben kann etwa derart vorgesehen sein, dass der Sicherheitsbereich zumindest teilweise in Richtung der Verfahrbewegung versetzt ist. Ein Teil des Sicherheitsbereichs, der der Bearbeitungsvorrichtung aus in Verfahrrichtung vorauseilt, kann so größer sein, als der Teil des Sicherheitsbereichs, der der Bearbeitungsvorrichtung in Verfahrrichtung nachfolgt. Zusätzlich oder alternativ kann in Abhängigkeit von einem Parameter der Arbeitseinrichtung die geometrische Form des Sicherheitsbereichs durch die Steuerung anpassbar sein.

Es ist bevorzugt, dass die Steuerung dazu ausgebildet ist, einen zweiten Sicherheitsbereich zu definieren. Der zweite Sicherheitsbereich ist vorzugsweise größer als der erste Sicherheitsbereich. Das Volumen des zweiten Sicherheitsbereichs ist vorzugsweise größer als das Volumen des ersten Sicherheitsbereichs. Vorteilhafterweise sind so Sicherheitsmaßnahmen graduell einleitbar. Beispielsweise kann bei Eintritt einer Person in den zweiten Sicherheitsbereich ein Warnhinweis ausgegeben und bei Eintritt einer Person in den ersten Sicherheitsbereich ein Maschinenstopp eingeleitet werden. Der zweite Sicherheitsbereich hat vorzugsweise die gleiche, in der Größe skalierte geometrische Form wie der erste Sicherheitsbereich. Die Steuerung kann aber auch dazu ausgebildet sein, den zweiten Sicherheitsbereich vollkommen unabhängig vom ersten Sicherheitsbereich zu definieren. Beispielsweise kann der erste Sicherheitsbereich in einer Projektion auf den Boden ein Kreis um die Arbeitseinrichtung sein und der zweite Sicherheitsbereich ein Rahmen um die Projektion der Arbeitseinrichtung auf den Boden. Vorzugsweise ist der erste Sicherheitsbereich vollständig von dem zweiten Sicherheitsbereich umschlossen. Der erste Sicherheitsbereich kann den zweiten Sicherheitsbereich überlappen. Eine Person kann sich dann zeitgleich im ersten Sicherheitsbereich und im zweiten Sicherheitsbereich befinden. Es kann aber beispielsweise auch vorgesehen sein, dass der zweite Sicherheitsbereich den ersten Sicherheitsbereich nur umgibt. Es kann vorgesehen sein, dass die Definition des zweiten Sicherheitsbereichs kontinuierlich veränderbar, beziehungsweise anpassbar, ist. Beispielsweise kann die Definition in Abhängigkeit des verwendeten Werkzeugs, einer Bewegungsgeschwindigkeit der Bearbeitungsvorrichtung oder dergleichen kontinuierlich angepasst werden.

Besonders bevorzugt ist die Steuerung dazu ausgebildet, eine Vorschubgeschwindigkeit der Arbeitseinrichtung zu limitieren, falls sich eine Person im zweiten Sicherheitsbereich und außerhalb des ersten Sicherheitsbereichs befindet. Eine limitierte Vorschubgeschwindigkeit weist einen Geschwindigkeitsbetrag unterhalb eines vorbestimmten Schwellwerts auf. Beispielsweise und bevorzugt kann die die Steuereinheit die Vorschubgeschwindigkeit auf 60% einer maximalen Vorschubgeschwindigkeit limitieren, falls sich eine Person im zweiten Sicherheitsbereich und außerhalb des ersten Sicherheitsbereichs befindet. Die maximale Vorschubgeschwindigkeit kann insbesondere eine maximale Bewegungsgeschwindigkeit des Turms und/oder des Werkzeugarms in einer und/oder mehreren Raumrichtungen sein.

Es ist ferner bevorzugt, dass die Steuerung dazu ausgebildet ist, einen Abstand einer im zweiten Sicherheitsbereich befindlichen Person zu einer Grenze des ersten Sicherheitsbereichs zu ermitteln, und die Vorschubgeschwindigkeit der Arbeitseinrichtung dynamisch, insbesondere umgekehrt proportional, an den ermittelten Abstand anzupassen. Vorteilhafterweise hält die Maschine dann nicht direkt, sondern passt sich an das mit abnehmenden Abstand steigende Kollisionsrisiko an. Das Kollisionsrisiko ist höher, wenn ein Abstand einer im zweiten Sicherheitsbereich befindlichen Person zu einer Grenze des ersten Sicherheitsbereichs klein ist und umgekehrt. Beispielsweise kann die Vorschubgeschwindigkeit unlimitiert sein, falls sich eine Person außerhalb des ersten Sicherheitsbereichs und außerhalb des zweiten Sicherheitsbereichs befindet. Falls sich eine Person in dem zweiten Sicherheitsbereich befindet und dem ersten Sicherheitsbereich annähert, kann die Vorschubgeschwindigkeit von der Steuereinheit stetig oder schrittweise auf ca. 10% der maximalen Vorschubgeschwindigkeit limitiert werden. Sobald die Person den ersten Sicherheitsbereich betritt, kann die Steuereinheit den Sicherheitshalt der Arbeitseinrichtung veranlassen. Es soll verstanden werden, dass aber auch andere prozentuale Grenzen möglich sind. Das Anpassen der maximalen Vorschubgeschwindigkeit kann kontinuierlich oder stufenweise erfolgen. Die Bearbeitungsvorrichtung ist bevorzugt dazu ausgebildet, nach einem Sicherheitshalt der Arbeitseinrichtung selbstständig wieder anzufahren, sofern keine Person (mehr) im ersten oder zweiten Sicherheitsbereich detektiert wird. Beispielsweise kann die Arbeitseinrichtung selbstständig wieder anfahren, wenn die Person oder die Personen, die den Sicherheitshalt bei Betreten des ersten Sicherheitsbereichs ausgelöst hat/ haben, den ersten Sicherheitsbereich und/oder den zweiten Sicherheitsbereich wieder verlassen hat/ haben. Selbstständiges Anfahren meint vorliegend, dass die Bearbeitungsvorrichtung dazu ausgebildet ist, ohne manuelle Freigabe (bzw. Reset) durch einen Benutzer wieder anzufahren. Es ist aber gleichermaßen bevorzugt, dass vor dem Wiederanfahren eine Nutzerfreigabe bzw. ein Reset erfolgen muss und die Arbeitseinrichtung dazu ausgebildet ist, nach einem Sicherheitshalt nicht selbstständig wieder anzufahren.

Bevorzugt weist die Bearbeitungsvorrichtung eine Visualisierungseinrichtung zum Visualisieren zumindest eines Sicherheitsbereichs auf. Eine derartige Visualisierungseinrichtung ist dazu ausgebildet, einen Sicherheitsbereich und/oder eine Grenze des Sicherheitsbereichs für das menschliche Auge sichtbar zu machen. Eine Visualisierungseinrichtung kann beispielsweise ein Boden der Bearbeitungsvorrichtung sein, der im Sicherheitsbereich beleuchtet ist. Die Visualisierungseinrichtung kann zum Visualisieren nur des ersten Sicherheitsbereichs, nur des zweiten Sicherheitsbereichs und/oder sowohl des ersten Sicherheitsbereichs als auch des zweiten Sicherheitsbereichs ausgebildet sein. Besonders bevorzugt kann die Visualisierungseinrichtung dazu ausgebildet sein, den ersten Sicherheitsbereich und den zweiten Sicherheitsbereich optisch unterschiedlich zu visualisieren. Beispielsweise kann der erste Sicherheitsbereich durch rote Linien visualisiert werden, währen der zweite Sicherheitsbereich durch blaue Linien visualisiert wird.

Vorzugsweise umfasst die Visualisierungseinrichtung zumindest eine Projektionseinrichtung, die dazu ausgebildet ist, zumindest eine Grenze eines Sicherheitsbereichs auf den Boden des Arbeitsbereichs zu projizieren. Vorteilhafterweise ist so für Bedienpersonen direkt ersichtlich, welcher Bereich nicht betreten werden sollte und/oder in welchem Teilbereich des Arbeitsbereichs potentiell Gefährdungen bestehen. Eine Projektionseinrichtung umfasst bevorzugt einen Laser und/oder einen Beamer. Bevorzugt sind ebenfalls Pointer und Lichtanzeiger, die sichtbare Lichtwellen in einem Intensitäts- und/oder Frequenzbereich emittieren, die keine Laserstrahlen darstellen. Die Projektionseinrichtung kann aber auch den gesamten Sicherheitsbereich auf den Boden des Arbeitsbereichs projizieren. Die Projektionseinrichtung ist bevorzugt dazu ausgebildet, sich zeitlich verändernde Grenzen zumindest eines Sicherheitsbereichs abzubilden. Beispielsweise kann die Projektionseinrichtung die Grenzen eines sich in Folge einer Bewegung der Arbeitseinrichtung entlang einer oder mehrerer Achsen bewegenden Sicherheitsbereichs auf den Boden des Arbeitsbereichs projizieren.

Die Bearbeitungsvorrichtung ist vorzugsweise dazu ausgebildet, unter Verwendung der Visualisierungseinrichtung ein optisches Warnsignal auszugeben, falls eine Person in einem Sicherheitsbereich detektiert wird. Ein optisches Warnsignal ist beispielsweise ein Blinken an der Visualisierungseinrichtung oder ein Blinken oder Aufleuchten eines Elements der Visualisierungseinrichtung. Zusätzlich oder alternativ ist ein optisches Warnsignal bevorzugt ein Schriftzug und/oder das Aufleuchten einer Warnfarbe. Ein optisches Warnsignal kann auch eine Farbänderung der von der Visualisierungseinrichtung erzeugten Visualisierung des Sicherheitsbereichs sein. Bevorzugt weist die Bearbeitungsvorrichtung zusätzlich eine akustische Warneinheit auf, die dazu ausgebildet ist, bei Detektieren einer Person im Sicherheitsbereich ein akustisches Warnsignal auszugeben, beispielsweise einen einmaligen oder sich wiederholenden Warnton, ein Sirenengeräusch, einen gesprochenen Warnhinweis oder dergleichen.

Besonders bevorzugt ist die Arbeitseinrichtung eine Fahrständerfräsmaschine. Eine Fahrständerfräsmaschine ist insbesondere dadurch gekennzeichnet, dass nicht das Werkstück, also hier das Modell, beweglich ist, sondern dass das Element, das das Werkzeug zumindest mittelbar trägt, also beispielsweise und bevorzugt ein Werkzeugarm, ein Turm und/oder ein Ständer, beweglich ist. Vorteilhafterweise muss somit das mitunter voluminöse Modell nicht bewegt werden.

Bevorzugt erfolgt die Personenerkennung Kl-gestützt. Insbesondere ist es somit vorteilhafterweise möglich, die Überwachungseinrichtung derart zu trainieren, dass sie zwischen Personen, Körperteilen oder Gegenständen, die sich nicht im Sicherheitsbereich befinden sollen und anderen Gegenständen, deren Aufenthalt im Sicherheitsbereich unproblematisch ist, unterscheidet. Vorzugsweise sind die Überwachungseinrichtung und die Steuerung so ausgebildet, dass eine Personenerkennung ohne von der Person getragene Sicherheitsmodule, wie beispielsweise RFID-Sender oder dergleichen, möglich ist. Dies ermöglicht einen besonders sicheren Betrieb und eine sehr bequeme Handhabung.

Die Steuerung ist vorzugsweise dazu ausgebildet, einen automatischen Wiederanlauf der Arbeitseinrichtung zu veranlassen, falls sich nach einem Sicherheitshalt keine Person mehr im ersten Sicherheitsbereich befindet. Vorteilhafterweise muss dann die Maschine nach einem Sicherheitshalt nicht zeitintensiv freigegeben werden und die Effizienz der Bearbeitung wird gesteigert. Beispielsweise kann der Sicherheitsbereich für einen kurzen Zeitraum betreten werden, um beispielsweise ein Designdetail in Augenschein zu nehmen. Ein derartiges kurzes Betreten führt gegebenenfalls zu einem Stopp der Maschine, der aber nicht manuell wieder aufgehoben werden muss.

Die Steuerung ist bevorzugt dazu ausgebildet, den Wiederanlauf der Arbeitseinrichtung nur dann zu veranlassen, wenn die Person, die den Sicherheitshalt verursacht hat, den Sicherheitsbereich verlassen hat und keine weitere(n) Person(en) im ersten Sicherheitsbereich ermittelt werden/wird.

Vorzugsweise ist die Steuerung dazu ausgebildet, mehrere Personen zu unterscheiden. Besonders bevorzugt kann die Steuereinheit dazu ausgebildet sein, Bewegungen einer oder mehrerer Personen durch den Arbeitsbereich zu verfolgen. Durch das Unterscheiden verschiedener Personen kann die Sicherheit weiter erhöht werden, da ein Wiederanlauf gegebenenfalls nur dann möglich ist, wenn die Steuerung ermittelt, dass die Person, die den Sicherheitshalt ausgelöst hat, den Sicherheitsbereich verlassen hat. So kann ein Wiederanlauf der Arbeitseinrichtung beispielsweise für den Fall verhindert werden, dass sich die Person, die den Sicherheitshalt ausgelöst hat, in einem von der Überwachungseinrichtung nicht erfassten Bereich des Sicherheitsbereichs befindet. Beispielsweise kann dies der Fall sein, wenn die Überwachungseinrichtung verschmutzt ist oder die Person durch das Modell oder weitere Gegenstände von der Überwachungseinrichtung abgeschirmt wird.

In einem zweiten Aspekt löst die Erfindung die eingangs genannte Aufgabe mit einem Bearbeitungssystem, aufweisend zumindest eine der vorstehend beschriebenen Bearbeitungsvorrichtungen und zumindest eine zweite Arbeitseinrichtung zum Bearbeiten, Erstellen und/oder Scannen eines Modells. Das Modell kann ein erstes Modell in dem ersten Arbeitsbereich der Arbeitseinrichtung der Bearbeitungsvorrichtung sein. Die (erste) Arbeitseinrichtung der Bearbeitungsvorrichtung und die zweite Arbeitseinrichtung können also an demselben Modell arbeiten, das in dem Arbeitsbereich der ersten Bearbeitungsvorrichtung angeordnet ist. Die zweite Arbeitseinrichtung kann einen zweiten Arbeitsbereich aufweisen. Der zweite Arbeitsbereich kann ein zu einem ersten Arbeitsbereich der ersten Bearbeitungsvorrichtung separater Arbeitsbereich sein. Der zweite Arbeitsbereich und der erste Arbeitsbereich können sich aber auch teilweise oder vollständig überlappen. Die zweite Bearbeitungsvorrichtung kann dazu ausgebildet sein ein zweites Modell zu bearbeiten, aufzubauen und/oder zu scannen. Die erste Bearbeitungsvorrichtung und die zweite Bearbeitungsvorrichtung können beispielsweise dazu ausgebildet sein, gemeinsam ein erstes Modell zu bearbeiten, aufzubauen und/oder zu scannen, und/oder die erste Bearbeitungsvorrichtung kann für ein erstes Modell vorgesehen sein und die zweite Bearbeitungsvorrichtung kann für ein zweites Modell vorgesehen sein. Die Überwachungseinrichtung der Bearbeitungsvorrichtung ist vorzugsweise dazu ausgebildet, den ersten Arbeitsbereich zu überwachen und die zweite Arbeitseinrichtung zu stoppen, falls ein Abstand zwischen einer Person und der zweiten Arbeitseinrichtung einen Grenzwert unterschreitet, und/oder den zweiten Arbeitsbereich zu überwachen und die zweite Arbeitseinrichtung zu stoppen, falls ein Abstand zwischen einer Person und der zweiten Arbeitseinrichtung einen Grenzwert unterschreitet. Darüber hinaus sind bevorzugt weitere Arbeitseinrichtungen vorgesehen. Die Arbeitseinrichtungen wirken bevorzugt zusammen, um ein Modell zu bearbeiten. Alternativ und/oder zusätzlich ist die zweite Arbeitseinrichtung dazu ausgebildet, ein zweites Modell zu bearbeiten und gegebenenfalls weitere Arbeitseinrichtungen sind dazu ausgebildet, jeweils weitere Modelle zu bearbeiten. Vorteilhafterweise werden mit einem derartigen Bearbeitungssystem mehrere Arbeitseinrichtungen von einer Überwachungseinrichtung überwacht. Bevorzugt wird im Betrieb nur diejenige Arbeitseinrichtung gestoppt und/oder verlangsamt, in deren Nähe, insbesondere in deren erstem Sicherheitsbereich, sich eine Person aufhält. Vorteilhafterweise können mehrere Modelle zeitgleich bearbeitet werden und die Arbeitseinrichtungen können dazu ausgebildet sein bei einem Unterbrechen der Bearbeitung eines Modells an einer Arbeitseinrichtung, etwa wegen eines von der Steuerung veranlassten Sicherheitshalts, die übrigen Modelle weiterzubearbeiten. Es ist beispielsweise vorgesehen, dass die Überwachungseinrichtung eine Kamera ist, die an der Decke einer Werkshalle mehrere Arbeitseinrichtungen umfasst. Die zweite Arbeitseinrichtung kann im Wesentlichen identisch zur ersten Arbeitseinrichtung ausgebildet sein. Es soll verstanden werden, dass kein zweiter Arbeitsbereich vorgesehen sein muss. Beispielsweise können beide Arbeitseinrichtungen simultan an einem (oder mehreren) Modellen in einem ersten Arbeitsbereich arbeiten. Für die Arbeitseinrichtungen kann dann jeweils ein eigener Sicherheitsbereich bzw. können dann jeweils mehrere eigene Sicherheitsbereiche definiert und überwacht werden.

Gemäß einem dritten Aspekt löst die Erfindung die eingangs genannte Aufgabe mit einem Überwachungssystem für eine Bearbeitungsvorrichtung, die Bearbeitungsvorrichtung aufweisend: Einen Arbeitsbereich in dem zumindest ein zu bearbeitendes Modell angeordnet werden und/oder in dem ein Modell aufgebaut werden kann, wobei der Arbeitsbereich barrierefrei und zumindest in einem Abschnitt von außen zugänglich ist; und zumindest eine Arbeitseinrichtung zum Bearbeiten des Modells mittels eines Werkzeugs, zum Erkennen des Modells und/oder zum Aufbauen des Modells mittels eines Werkzeugs, wobei die Arbeitseinrichtung dazu ausgebildet ist, sich zumindest abschnittsweise durch den Arbeitsbereich zu bewegen, wobei das Überwachungssystem eine Überwachungseinrichtung zum Überwachen des Arbeitsbereichs, und eine Steuerung aufweist, die mit einer Maschinensteuerung der Bearbeitungsvorrichtung verbindbar ist; wobei die Steuerung dazu ausgebildet ist, unter Verwendung der Überwachungseinrichtung im Arbeitsbereich befindliche Personen zu erkennen, zumindest einen ersten Sicherheitsbereich um zumindest einen Abschnitt der Arbeitseinrichtung zu definieren, und einen Sicherheitshalt der Arbeitseinrichtung zu veranlassen, falls sich eine Person im ersten Sicherheitsbereich befindet.

Es soll verstanden werden, dass die Bearbeitungsvorrichtung nach dem ersten Aspekt der Erfindung, das Bearbeitungssystem nach dem zweiten Aspekt der Erfindung und das Überwachungssystem nach dem dritten Aspekt der Erfindung gleiche und ähnliche Unteraspekte aufweisen, wie sie insbesondere in den abhängigen Ansprüchen niedergelegt sind. Insofern wird für bevorzugte Ausführungsformen und Weiterbildungen des Bearbeitungssystems und des Überwachungssystems gemäß dem zweiten und dritten Aspekt der Erfindung vollumfänglich auf die bevorzugten Weiterbildungen und Ausführungsformen der Bearbeitungsvorrichtung gemäß dem ersten Aspekt der Erfindung verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsformvorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische Draufsicht auf eine erste Ausführungsform einer Bearbeitungsvorrichtung;
- Fig. 2: eine schematische Draufsicht auf eine zweite Ausführungsform einer Bearbeitungsvorrichtung;
- Fig. 3: eine schematische Draufsicht auf eine dritte Ausführungsform einer Bearbeitungsvorrichtung;
- Fig. 4: eine schematische Seitansicht der dritten Ausführungsform einer Bearbeitungsvorrichtung;
- Fig.5: eine schematische Draufsicht einer vierten Ausführungsform einer Bearbeitungsvorrichtung;
- Fig. 6: eine schematische Seitansicht einer fünften Ausführungsform einer Bearbeitungsvorrichtung;
- Fig. 7: eine schematische Seitansicht einer sechsten Ausführungsform einer Bearbeitungsvorrichtung;
- Fig. 8: eine schematische Seitansicht einer siebten Ausführungsform einer Bearbeitungsvorrichtung;
- Fig. 9: eine schematische Draufsicht der siebten Ausführungsform einer Bearbeitungsvorrichtung; und in
- Fig. 10: eine schematische Draufsicht auf ein Bearbeitungssystem mit zwei Arbeitseinrichtungen.

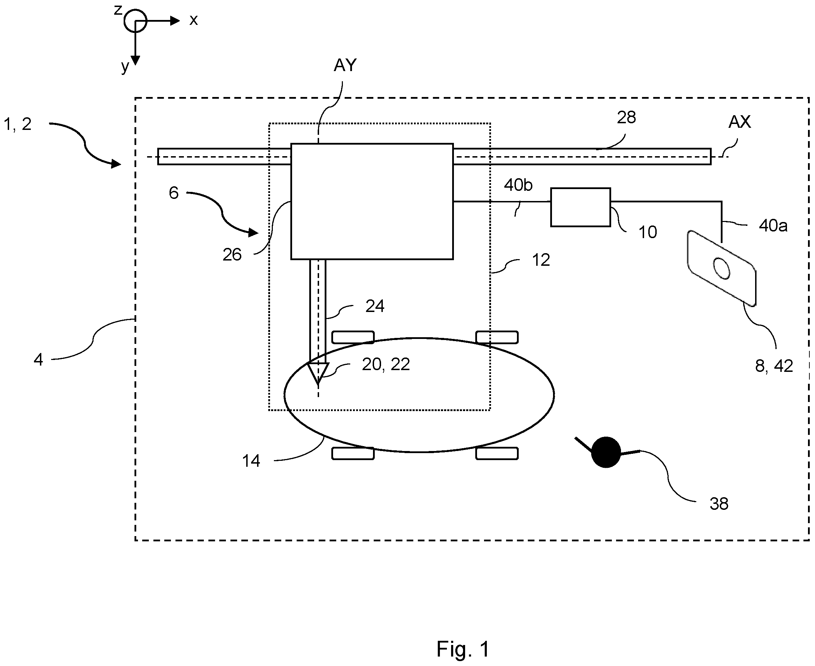

Figur 1 zeigt schematisch eine Bearbeitungsvorrichtung 1. Die Bearbeitungsvorrichtung 1 weist einen Arbeitsbereich 4, eine Arbeitseinrichtung 6, eine Überwachungseinrichtung 8, eine Steuerung 10 und einen Sicherheitsbereich 12 auf. Die Bearbeitungsvorrichtung 1 kann zum Bearbeiten, Erstellen und/oder Erfassen eines Modells 14 ausgebildet sein. Im in Figur 1 gezeigten ersten Ausführungsbeispiel ist die Bearbeitungsvorrichtung 1 eine Fräsmaschine 2 und zum Bearbeiten des Modells 14 durch Materialabtrag ausgebildet.

Der Arbeitsbereich 4 ist hier ein Bereich, in dem die Bearbeitungsvorrichtung 1 ein Modell 14 bearbeiten, erstellen oder erfassen kann. Die Definition des Arbeitsbereichs 4 kann vor der Inbetriebnahme der Bearbeitungsvorrichtung 1 erfolgen. Der Arbeitsbereich 4 wird vorzugsweise autonom durch die Steuerung 10 und/oder unter Verwendung der Steuerung 10 durch einen Benutzer definiert.

Der Sicherheitsbereich 12 wird durch die Steuerung 10 definiert. Hier ist der Sicherheitsbereich 12 ein Bereich, indem im Betrieb der Bearbeitungsvorrichtung 1 besonders hohe Verletzungsgefahr besteht, beispielsweise durch Kontakt der Person 38 mit einem Fräskopf der Fräsmaschine 2. Im ersten Ausführungsbeispiel definiert die Steuerung 10 den Sicherheitsbereich 12 um die Arbeitseinrichtung 6 herum. Der Sicherheitsbereich 12 ist nicht notwendigerweise durch eine strukturelle, physische Grenze abgegrenzt. Er ist deshalb in Figur 1 gepunktet dargestellt. Vielmehr ist die Steuerung 10 unter Verwendung der Überwachungseinrichtung 8 dazu ausgebildet, eine die Arbeitseinrichtung 6 einschließende, virtuelle Grenze festzulegen, wobei die virtuelle Grenze den Sicherheitsbereich 12 umschließt. Die Steuerung 10 ist bevorzugt dazu ausgebildet, Raumkoordinaten, mit denen der Sicherheitsbereich 12 gegenüber seiner Umgebung abgegrenzt ist, zu bestimmen.

Auch der Arbeitsbereich 4 muss nicht notwendigerweise strukturell abgegrenzt sein und ist deshalb in Figur 1 durch eine Strichlinie illustriert. Es kann aber auch vorgesehen sein, dass der Arbeitsbereich 4 abschnittsweise mit physischen Abgrenzungsmitteln, etwa mit Wandelementen, Gittern oder dergleichen gegenüber seiner Umgebung abgetrennt ist. Im gezeigten ersten Ausführungsbeispiel ist der Arbeitsbereich 4 (quer zu einem Boden des Arbeitsbereichs) von allen vier Seiten barrierefrei zugänglich. Eine Person 38 kann den Arbeitsbereich 4 also von allen vier Seiten betreten und sich dem Modell 14 nähern. Es ist aber gleichermaßen bevorzugt, dass der Arbeitsbereich 4 nur von einer oder von mehreren Seiten aus zugänglich ist, oder lediglich an Abschnitten der Seiten. Es soll verstanden werden, dass der Arbeitsbereich 4 hier zwar mit rechteckiger Grundfläche abgebildet ist, aber bevorzugt auch eine andere Grundfläche, z.B. Kreisform, Ellipsenform, Mehreckform oder Freiform annimmt. Ausgehend von diesen flächigen Grundformen erstreckt sich der Arbeitsbereich 4 bevorzugt vertikal in die Höhe. Vereinfachend kann aber auch nur ein zweidimensionaler Arbeitsbereich 4 definiert sein, der dann für einen vordefinierten Höhenbereich und/oder in einer vordefinierten Höhe überwacht wird.

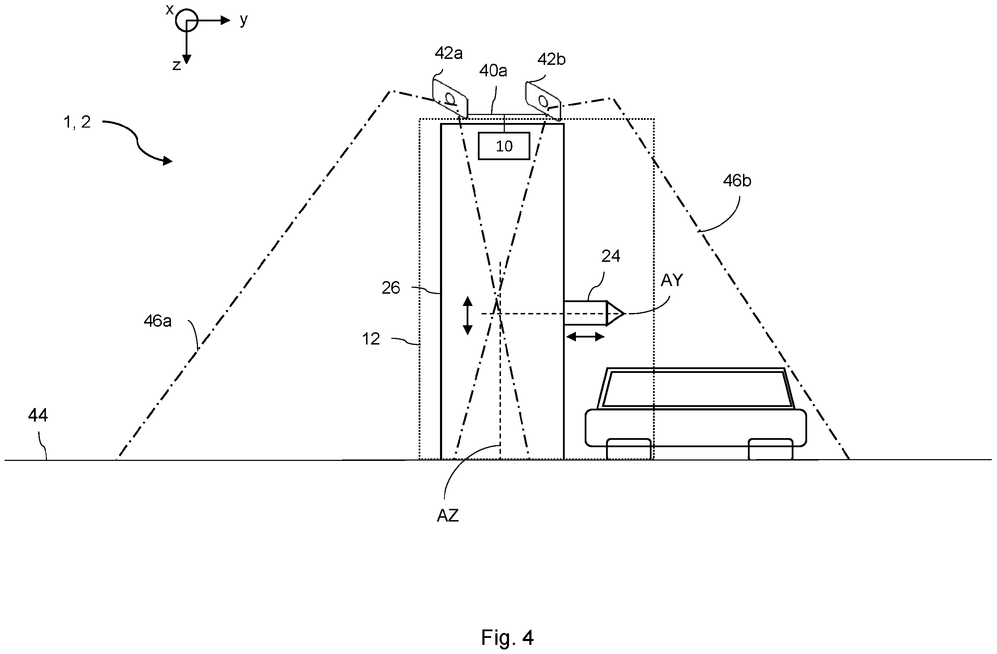

Innerhalb des Arbeitsbereichs 4 kann zumindest ein zu bearbeitendes Modell 14 angeordnet und/oder aufgebaut werden. Ein Modell 14 ist beispielsweise und hier abgebildet ein Modell eines Fahrzeugs, insbesondere ein Clay-Modell eines Fahrzeugs. Das Modell 14 kann für unterschiedliche Zwecke verwendet werden, etwa für strömungsmechanische Untersuchungen. Ein Modell 14 kann aber alternativ beispielsweise auch ein Modell eines Flugzeugs, eines Wassergefährts, eines Möbels, einer Figur, ein Kunstwerk, ein Architekturmodell und/oder ein anderes Designobjekt sein. Gegenüber dem zu modellieren Objekt kann das Modell 14 maßstabsgetreu, verkleinert oder vergrößert aufgebaut werden. Beim Fertigen des Modells 14 wird zunächst ein Unterbau 16 aus Stahl, Holz, Kunststoffplatten oder dergleichen im Arbeitsbereich 4 aufgestellt. Auf den Unterbau 16 wird eine mehrere Zentimeter oder Dezimeter dicke Schicht 18 aus Clay oder einer anderen Modelliermasse aufgebracht (vgl. auch Figur 4), welche dann von der Arbeitseinrichtung 6 bearbeitet wird.

Die Arbeitseinrichtung 6 umfasst ein Werkzeug 20, das in Figur 1 ein Fräswerkzeug 22 ist. Das Werkzeug 20 ist über einen Werkzeugarm 24 mit einem Turm 26 der Arbeitseinrichtung 6 verbunden. Der Turm 26 ist entlang einer ersten Führungsschiene 28 entlang einer ersten Bewegungsachse AX in eine erste Raumrichtung X beweglich. In anderen Varianten kann der Turm 26 aber auch ohne Führungsschiene 28 bewegbar ausgebildet sein. Der mit dem Turm 26 verbundene Werkzeugarm 24 ist gemeinsam mit dem Turm 26 entlang der ersten Bewegungsachse AX bewegbar. Zudem ist der Werkzeugarm 24 im ersten Ausführungsbeispiel in eine weitere Raumrichtung Y senkrecht zur ersten Raumrichtung X beweglich, entlang einer zweiten Bewegungsachse AY. Der Werkzeugarm 24 ist ferner quer zur ersten Bewegungsachse entlang einer dritten Bewegungsachse AZ an dem Turm 26 in eine vertikale Raumrichtung Z verschiebbar (vgl. Figur 4). Insgesamt ist die Arbeitseinrichtung 6 beziehungsweise deren Werkzeugarm 24 daher im ersten Ausführungsbeispiel in drei translatorische Raumrichtungen X, Y und Z beweglich.

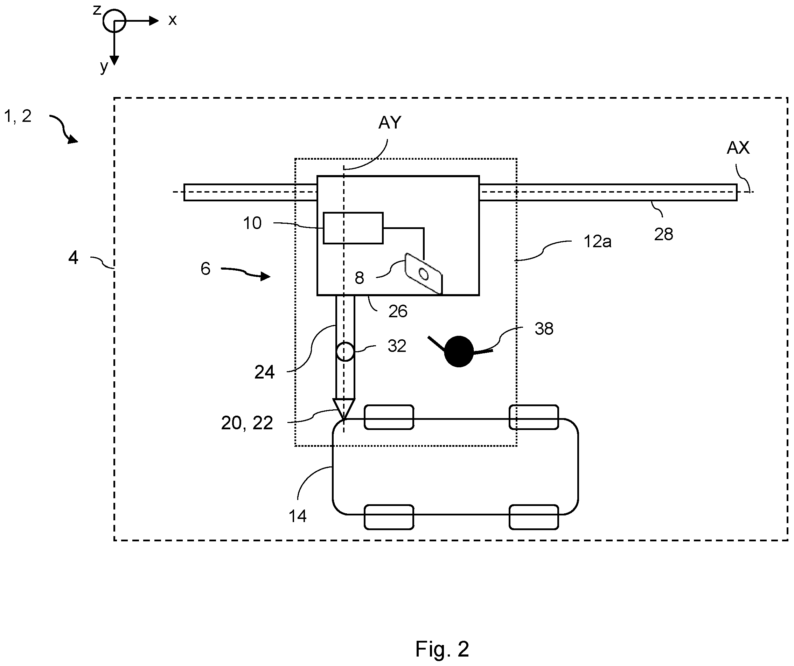

Auch das Modell 14 kann translatorisch und/oder rotatorisch beweglich sein. Vorteilhafterweise ist die so erreichbare Designvielfalt größer und komplexere Formen, insbesondere Freiformen, sind mit geringerem Aufwand und/oder schneller bearbeitbar. Im ersten Ausführungsbeispiel und bevorzugt ist das Modell 14 jedoch stationär in dem Arbeitsbereich 6 angeordnet. Ein stationäres Modell 14 wird beim Bearbeiten nicht bewegt. So kann insbesondere ein Bewegen großer und/oder schwerer Modelle 14 innerhalb des Arbeitsbereichs 4 entfallen. Für ein flexibles Bearbeiten auch an Freiformen und/oder Hinterschnitten weist das Bearbeitungssystem 1 bevorzugt weitere Freiheitsgrade, insbesondere auch rotatorische Freiheitsgrade auf. Etwa kann die Bearbeitungsvorrichtung 1 auch als Hexapodfräsmaschine ausgeführt sein. In dem in Figur 2 gezeigten Ausführungsbeispiel ist der Werkzeugarm 24 an einem rotatorischen Gelenk 32, etwa einem Drehgelenk, angebracht und verfügt somit über einen weiteren rotatorischen Freiheitsgrad. Das Werkzeug 20 kann drehbar an dem Werkzeugarm 24 angeordnet sein. Beispielsweis kann das Werkzeug 20 um die dritte Bewegungsachse AZ (die in Figur 2 orthogonal zur Bildebene ist und deshalb nicht dargestellt ist) drehbar sein. Zudem ist das Werkzeug 20 vorzugsweise auch um eine oder zwei der horizontalen Bewegungsachsen AY und oder AX drehbar. Die drehbare Anordnung des Werkzeugs 20 und die Möglichkeit, den Werkzeugarm 24 und das daran angeordnete Werkzeug 20 in drei Raumrichtungen translatorisch zu bewegen, erlauben eine besonders hohe Gestaltungsfreiheit für das Modell 14. Ferner kann ein Nachbearbeitungsaufwand erheblich reduziert sein.

Obgleich in den Figuren 1 - 10 Bauformen mit im Wesentlich horizontal an dem Turm 26 geführtem Werkzeug 20 abgebildet sind, soll verstanden werden, dass die Bearbeitungsvorrichtung 1 andere gängige Bauformen von Bearbeitungszentren haben kann, insbesondere solche mit vertikaler Spindel und/oder Gantrybauweise. Es soll verstanden werden, dass eine Fräsmaschine 2 als Bearbeitungsvorrichtung 1 bevorzugt ist. Gleichermaßen ist bevorzugt, dass die Bearbeitungsvorrichtung 1 ein Bearbeitungszentrum ist, welches insbesondere dazu ausgebildet ist, neben dem Fräsen alternative und/oder weitere Fertigungsoperationen wie Bohren, Schaben, Schleifen und/oder additives Auftragen von Material durchzuführen.

Anders als in Figur 1 dargestellt, kann die Bearbeitungsvorrichtung 1 dann mehrere Werkzeuge 20 aufweisen. In der Figur 1 ist das Werkzeug 20 ein Fräswerkzeug 22. Das Werkzeug 20 kann in anderen Varianten auch ein Gewindefräser, ein Bohrer, ein Schleifaufsatz ein Messer, ein Schaber oder dergleichen sein. Insbesondere für eine leicht verformbare Schicht 18 aus Modelliermasse ist das Werkzeug 20 bevorzugt ein Stempel oder ein anderes umformendes Werkzeug. Bevorzugt weist die Bearbeitungsvorrichtung 1 ein Werkzeugwechselelement, etwa einen Werkzeugrevolver auf, um im Betrieb eigenständig oder gesteuert durch eine Bedienperson zwischen verschiedenen Werkzeugen 20 zu wechseln.

Die Bearbeitungsvorrichtung 1 weist alternativ oder zusätzlich Mess- und/oder Prüfmittel zum Erfassen eines Modells 14 auf. Das Erfassen kann auch als Vermessen bezeichnet werden. Derartige Messmittel sind beispielsweise Taster, Prüfstifte, Prüflehren oder dergleichen, die ebenfalls entlang der beschriebenen Bewegungsachsen AX, AZ und/oder AY translatorisch und/oder rotatorisch beweglich angeordnet sein können.

Beim Bewegen der Arbeitseinrichtung 6 durch den Arbeitsbereich 4 muss sichergestellt sein, dass es nicht zu Kollisionen der Arbeitseinrichtung 6 mit Personen 38 kommt, die sich im Arbeitsbereich 4 aufhalten. Die Bearbeitungsvorrichtung 1 weist hierfür eine Überwachungseinrichtung 8 zum Überwachen des Arbeitsbereichs 4 auf. Das Überwachen des Arbeitsbereichs 4 der Bearbeitungsvorrichtung 1 unter Verwendung einer Überwachungseinrichtung 8 ist besonders wichtig, da der Arbeitsbereich 4 im ersten Ausführungsbeispiel gemäß Figur 1 von allen Seiten zugänglich ist.

Die Überwachungseinrichtung 8 ist durch ein Datenübertragungskabel 40a mit einer Steuerung 10 verbunden. Die Steuerung 10 wiederum ist durch ein Datenübertragungskabel 40b mit der Arbeitseinrichtung 6 verbunden. Alternativ können anstelle der Datenübertragungskabel 40a, 40b Einrichtungen zum drahtlosen Übertragen von Daten vorgesehen sein. Solche Einrichtungen können beispielsweise zum drahtlosen Übertragen von Daten mittels Funk ausgebildet sein.

Die Überwachungseinrichtung 8 ist bevorzugt eine Kamera 42. Die Steuerung 10 ist unter Verwendung der Überwachungseinrichtung 8 dazu ausgebildet, den ersten Sicherheitsbereich 12a und optional weitere Sicherheitsbereiche um zumindest einen Abschnitt der Arbeitseinrichtung 6 herum zu definieren. Beispielsweise können von der Kamera 42 erfasste Bilddaten über das Datenübertragungskabel 40a an der Steuerung 10 bereitgestellt werden. Die Steuerung 10 ist dazu ausgebildet, die Bilddaten auszuwerten und eine Position, Abmessungen und/oder eine räumliche Erstreckung der Arbeitseinrichtung 6 im Arbeitsbereich 4 zu erkennen. Unter Verwendung der ermittelten Position, Abmessungen und/oder räumlichen Erstreckung der Arbeitseinrichtung 6 definiert die Steuerung 10 im gezeigten ersten Ausführungsbeispiel den ersten Sicherheitsbereich 12a. Es kann in alternativen Ausführungsformen aber auch vorgesehen sein, dass die Steuerung 10 den ersten Sicherheitsbereich 12a unabhängig von der Arbeitseinrichtung 6 definiert.

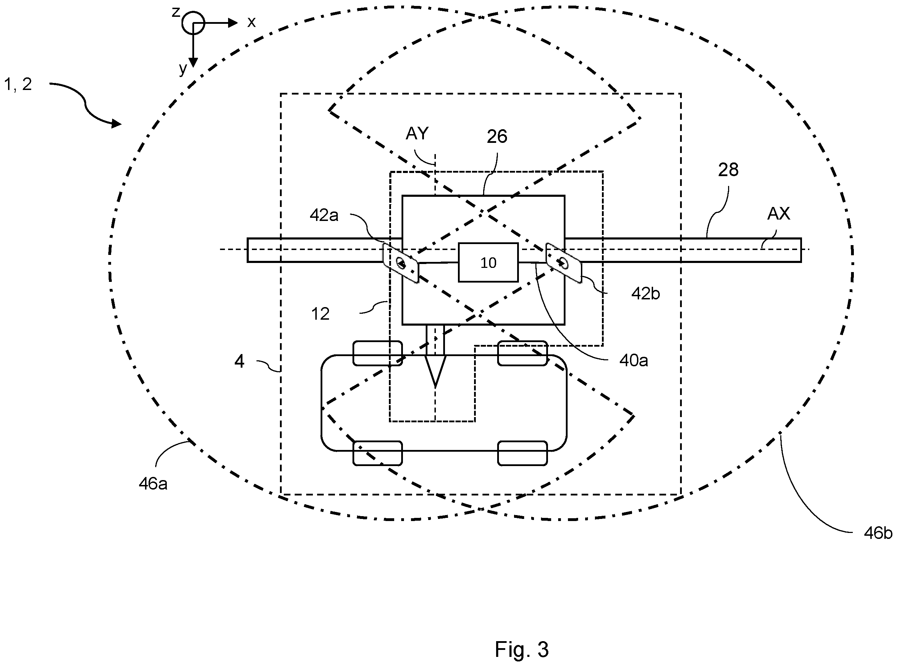

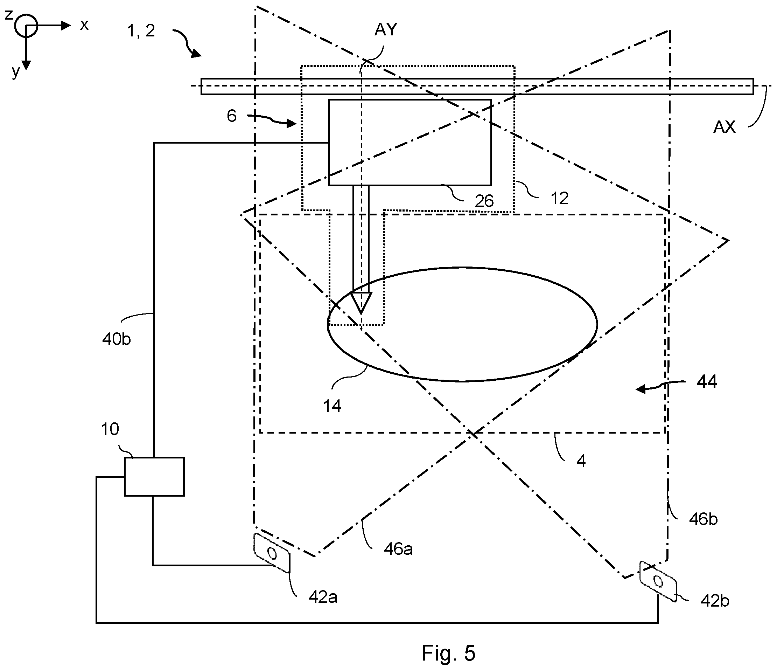

In dem in Figur 1 gezeigten Beispiel umfasst der erste Sicherheitsbereich 12a das Fräswerkzeug 22, den Werkzeugarm 24 und den Turm 26. Der Sicherheitsbereich 12a weist hier eine rechteckige Grundfläche auf. Bevorzugt, und in den Figuren 3 und 5 beispielhaft dargestellt, weist der Sicherheitsbereich 12a eine geometrische Form auf, die insbesondere an das Werkzeug 20 und/oder die Arbeitseinrichtung 6 angepasst sein kann. Insbesondere ist der erste Sicherheitsbereich 12a in einer Dimension parallel zu einem Untergrund auf dem das Modell 14 angeordnet ist und/oder in einer im Wesentlichen horizontalen Ebene an das Werkzeug 20 und/oder die Arbeitseinrichtung 6 angepasst. In Figur 3 ist der Sicherheitsbereich 12 in einer horizontalen Ebene (in Figur 2 die Bildebene) bzw. in einer zu einem Boden 44 parallelen Ebene an das Werkzeug 20 und die Arbeitseinrichtung 6 angepasst. Hier haben die Grenzen des Sicherheitsbereichs 12 im Wesentlichen einen konstanten Abstand zur Arbeitseinrichtung 6 und zum Werkzeug 20, wobei der Abstand der Grenzen des Sicherheitsbereichs 12 insbesondere im Bereich des Werkzeugs 20 auch größer sein könnte. In einer Höhenrichtung ist der Sicherheitsbereich 12 (bzw. dessen Abmessungen) im Ausführungsbeispiel gemäß Figur 4 vorzugsweise konstant. Es soll jedoch verstanden werden, dass der Sicherheitsbereich 12 eine vordefinierte oder variable Höhe haben kann. Beispielsweise und bevorzugt kann der Sicherheitsbereich 12, gemessen vom Boden 44, eine Höhe von etwa 2,5 Meter haben. In der Höhe könnte der Sicherheitsbereich 12 auch durch einen Erfassungsbereich der Überwachungseinrichtung 8, beispielsweise der Kamera 42 begrenzt sein.

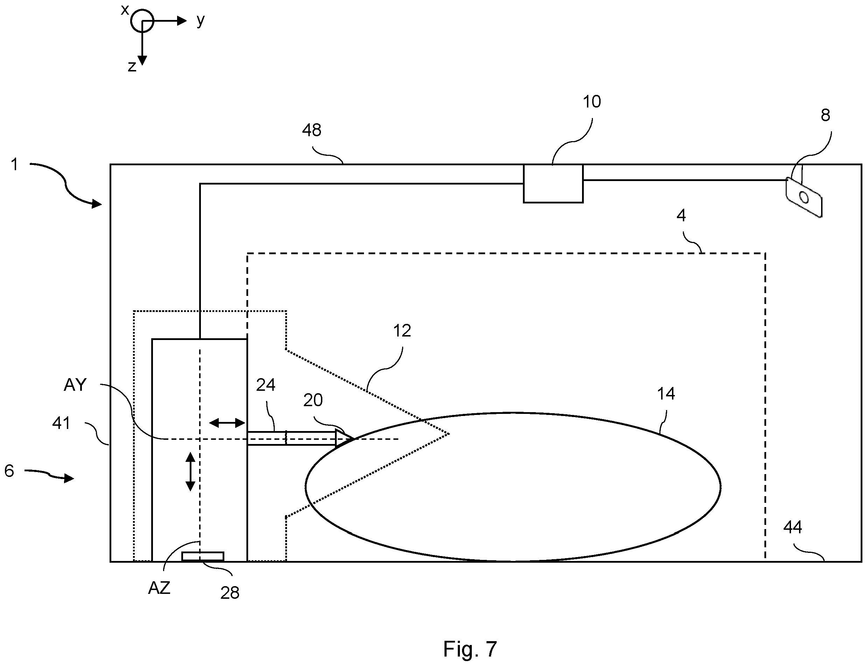

Figur 7 zeigt eine Frontalansicht einer weiteren Ausführungsform einer Bearbeitungsvorrichtung 1, die in einer Werkhalle 41 angeordnet ist. Der Sicherheitsbereich 12 erstreckt sich hier nicht vom Boden 44 der Werkhalle 41. Vielmehr hat der Sicherheitsbereich 12 einen vorbestimmten Abstand zum Werkzeug 20. Um zu verdeutlichen, dass die geometrische Konfiguration des Sicherheitsbereichs 12 an das Werkzeug 20 angepasst ist, weisen der Sicherheitsbereich 12 und das Werkzeug 20 in Figur 7 ähnliche, dreieckige Formen auf.

Es soll verstanden werden, dass die Figuren 3 und 5 schematische Darstellungen zum Verdeutlichen der Anpassung des Sicherheitsbereichs 12 an das Werkzeug 20 und/oder die Arbeitseinrichtung 6 sind. Ein angepasster Sicherheitsbereich 12 weist nicht notwendigerweise eine ähnliche Form wie das Werkzeug 20 und/oder die Arbeitseinrichtung 6 auf. Vielmehr ist ein angepasster Sicherheitsbereich 12 besonders bevorzugt dahingehend an das Werkzeug 20 angepasst, dass er etwa für besonders scharfkantige und/oder schnell bewegte Werkzeugen 20 größer ist als für stumpfe Werkzeuge 20, von denen eine geringere Verletzungsgefahr für Personen ausgeht. In Varianten kann der Sicherheitsbereich 12 um das Werkzeug 20 größer sein als der Sicherheitsbereich um den Werkzeugarm 24 oder den Turm 26. Ein angepasster Sicherheitsbereich 12 kann auch dahingehend angepasst sein, dass er im Bereich des Werkzeugarms 24 auskragt (vgl. Figur 3 und Figur 5). Die Auskragung des Sicherheitsbereichs 12 kann bei Bewegung des Werkzeugarms 24 beispielsweise in Richtung der Bewegungsachse AY oder AX entsprechend kleiner oder größer werden. In analoger Weise kann sich die Auskragung auch bei einem rotatorischen Bewegen des Werkzeugarms 24 um eine oder mehrere der Bewegungsachsen AY, AZ und/oder AX anpassen.

Die Steuerung 10 ist dazu ausgebildet, zumindest eine Werkzeuginformation zu erhalten und/oder zu erfassen. Im vorliegenden Ausführungsbeispiel identifiziert die Werkzeuginformation die Art des Werkzeugs 20. So kann die Steuerung 10 unter Verwendung der Werkzeuginformation beispielsweise ermitteln, ob ein Fräskopf oder ein vergleichsweise ungefährlicher Taster als Werkzeug 20 an der Arbeitseinrichtung 6 angebracht ist. Die Werkzeuginformation erhält die Steuerung 10 bevorzugt durch die Überwachungseinrichtung 8, durch eine Benutzereingabe und/oder als Signal von einem Werkzeugwechselelement der Arbeitseinrichtung 6.

Die Steuerung 10 ist dazu ausgebildet, unter Verwendung der Überwachungseinrichtung 8 bzw. unter Verwendung von durch die Überwachungseinrichtung 8 bereitgestellten Signalen und/oder Daten das im Arbeitsbereich 4 befindliche Modell 14 zu erkennen. So kann die Steuerung 10 Kollisionen der Arbeitseinrichtung 6 mit dem Modell 14 oder einem Modellrohling verhindern.

Figur 1 zeigt ferner eine Person 38, die sich zumindest teilweise im Arbeitsbereich 4 aufhält. Die Steuerung 10 ist unter Verwendung der Überwachungseinrichtung 8 dazu ausgebildet die Person 38 zu erkennen. Im Ausführungsbeispiel gemäß Figur 1 wertet die Steuerung 10 von der Kamera 42 bereitgestellte Bilddaten aus, um die Person 38 und deren Position im Arbeitsbereich 4 zu erkennen. Die Steuerung 10 ist dazu ausgebildet, einen Sicherheitshalt der Arbeitseinrichtung 6 zu veranlassen, falls sich die Person 38 im Sicherheitsbereich 12 befindet. Dies ist in Figur 2 der Fall. Die Steuerung 10 veranlasst den Sicherheitshalt, sodass eine Verletzung der Person 38 durch die Arbeitseinrichtung 4 verhindert wird.

In der Figur 2 ist eine bevorzugte Weiterbildung der Bearbeitungsvorrichtung 1 abgebildet. Insbesondere ist hier die Überwachungseinrichtung 8 eine dynamische Überwachungseinrichtung 8. Die dynamische Überwachungseinrichtung 8 ist beweglich und kann sich zumindest abschnittsweise durch den Arbeitsbereich 4 bewegen. In der in Figur 2 gezeigten Ausführungsform bewegt sich die Überwachungseinrichtung 8 gleichlaufend mit der Arbeitseinrichtung 6, insbesondere mit dem Turm 26. Die Überwachungseinrichtung 8 ist an der Spitze des Turms 26 angeordnet. Die Steuerung 10 ist ebenfalls am Turm 26 angeordnet. Steuerung 10 und Überwachungseinrichtung 8 werden dann mit dem Turm 26 gemeinsam entlang der ersten Führungsschiene 28 bewegt. Es soll verstanden werden, dass der Turm 26 nicht an einer Führungsschiene 28 geführt sein muss. Beispielsweise und bevorzugt kann der Turm 26 auch dazu ausgebildet sein, einer Markierung und/oder Leitlinie zu folgen.

Eine weitere bevorzugte Ausführungsform ist in Figur 3 abgebildet. Der Turm 26 ist entlang der Führungsschiene 28 in die erste Raumrichtung X entlang der ersten Bewegungsachse AX beweglich. In die zweite Raumrichtung Y ist der Werkzeugarm 24 mit dem Werkzeug 20 durch eine Linearführung (nicht abgebildet) relativ zum Turm translatorisch 26 beweglich. Es können auch Gelenke vorgesehen sein, sodass der Werkzeugarm 24 um eine oder mehrere der Bewegungsachsen AX, AY, AZ rotierbar ist. Um den Turm 26 und den Werkzeugarm 24 mit dem Werkzeug 20 herum ist von der Steuerung 10 ein Sicherheitsbereich 12 festgelegt. Der Sicherheitsbereich 12 ist in dem hier gezeigten Beispiel nicht rechteckig, sondern im Bereich des Werkzeugarms 24 mit dem Werkzeug 20 erweitert. Die Steuerung 10 ist beispielsweise dazu ausgerichtet, den Sicherheitsbereich 12 weiter in Y-Richtung zu vergrößern, wenn das Werkzeug 20 mittels der Linearführung weiter entlang der zweiten Bewegungsachse AY verschoben wird. Bei einem Verschieben des Turms 26 in die erste Raumrichtung X entlang der Führungsschiene 28 kann der Sicherheitsbereich 12 durch die Steuerung 10 derart neu festgelegt werden, dass der Sicherheitsbereich 10 gleichermaßen in die Raumrichtung X verschoben wird. Die Steuerung 10 ist dazu eingerichtet, kontinuierlich den Sicherheitsbereich 12 an die aktuelle und/oder zukünftige Position und/oder Bewegung des Turms 26, des Werkzeugarms 24 und/oder des Werkzeugs 22 anzupassen.

Die Position bzw. die Bewegung von Werkzeugarm 24 und Werkzeug 22 innerhalb des Arbeitsbereichs 4 wird in der in Figur 3 gezeigten Ausführungsform von zwei Kameras 42a, 42b erfasst. Beide Kameras 42a, 42b befinden sich an der Spitze des Turms 26. Jede Kamera überwacht einen Erfassungsbereich 46a, bzw. 46b. Die Erfassungsbereiche 46a und 46b überlappen teilweise. Es soll verstanden werden, dass die Erfassungsbereiche 46a und 46b nicht an der kreisförmigen, strichpunktförmig dargestellten Linie enden. Vielmehr illustriert diese Linie den Bereich, für den Bildaufnahmen mit einer Genauigkeit erzeugt werden, die ausreichend ist, um mithilfe eines Bildverarbeitungsprogramms Positionsdaten, etwa von Personen 38 oder dem Werkzeug 20 zu bestimmen. Die Erfassungsbereiche 46a, 46b sind insbesondere so gewählt, dass der Arbeitsbereich 4 vollständig erfassbar ist. Mit Änderungen der optischen Einstellungen der Kameras 42a, 42b (z.B. Brennweite, Positionierung von Linsen, etc.) und/oder deren Position können die Erfassungsbereiche 46a, 46b angepasst werden. In dem hier gezeigten Ausführungsbeispiel decken die Erfassungsbereiche 46a, 46b den gesamten Arbeitsbereich 4 ab (mit Ausnahme eines Totbereichs, der jedoch lediglich den Turm 26 selbst betrifft). Durch Datenübertragungskabel 40a werden von den Kameras 42a, 42b erzeugte Bilddaten bereitgestellt. Durch die Steuerung 10, insbesondere ein Bildverarbeitungsprogramm der Steuerung 10, wird die Position von Werkzeug 20, Werkzeugarm 24 und womöglich vorhandenen Personen 38 innerhalb des Arbeitsbereichs 4 bestimmt. Beim Verfahren des Turms 26 entlang einer der Bewegungsachsen AX oder AY verfahren die am Turm 26 montierten Kameras 42a, 42b gemeinsam mit dem Turm 26. Das Aufnehmen von Bildern erfolgt demnach vorteilhafterweise stets in der Nähe des Turms 26. Eine Seitansicht der Ausführungsform aus Figur 3 ist in Figur 4 dargestellt. In der Figur 4 ist besonders anschaulich dargestellt, dass sich die Kameras 42a, 42b an der Spitze des Turms 26 befinden und dazu ausgebildet sind, jeweils einen Erfassungsbereich 46a bzw. 46b zu erfassen. Vorzugsweise erfasst die Überwachungseinrichtung 8 unabhängig von der Position des Turms 26 stets den gesamten Arbeitsbereich 4.

Die in Figur 5 abgebildete Ausführungsform einer Bearbeitungsvorrichtung 1 weist ebenfalls eine erste Kamera 42a und eine zweite Kamera 42b auf. Anders als in den zuvor in Bezug auf die Figuren 3 und 4 beschriebenen Ausführungsformen, sind die Kameras 42a, 42b und die Steuerung 10 in dem hier gezeigten Beispiel nicht fest mit dem Turm 26 verbunden und bewegen sich nicht mit dem Turm 26. Die Kameras 42a, 42b sind an festen Positionen einer Werkhalle 41 angeordnet. Alternativ kann vorgesehen sein, dass sich die Kameras 42a, 42b in der Werkhalle 41 bewegen ohne dabei fest mit dem Turm 26 verbunden zu sein. Das kann beispielsweise auf eigenen Führungsschlitten oder auf geführten und/oder ferngesteuerten Wägen erfolgen.

Die erste Kamera 42a erfasst einen ersten Erfassungsbereich 46a und die zweite Kamera 42b erfasst einen zweiten Erfassungsbereich 46b. Die Erfassungsbereiche 46a, 46b sind hier schematisch und begrenzt durch Strichpunktlinien abgebildet. Die Erfassungsbereiche 46a und 46b überlappen teilweise. Beide Kameras 42a, 42b überwachen den Arbeitsbereich 4 zumindest abschnittsweise. Die Vereinigungsmenge der beiden Erfassungsbereiche 46a, 46b deckt den kompletten Arbeitsbereich 4 ab. Die Kameras 42a, 42b stellen Überwachungseinrichtungsinformationen für die Steuerung 10 bereit. Diese Überwachungseinrichtungsinformationen umfassen im vorliegenden Ausführungsbeispiel die erfassten Bilder bzw. entsprechende Bilddaten der jeweiligen Erfassungsbereiche 46a, 46b, sowie Informationen zur Position, Ausrichtung und/oder Einstellung der Kameras 42a, 42b.

Es kann aber auch vorgesehen sein, dass beispielsweise Informationen zur Position und Ausrichtung der Kameras 42a, 42b beim Einrichten des Systems für die Steuerung 10 vorgespeichert werden. Anhand der Überwachungseinrichtungsinformationen ist die Steuerung 10 dazu ausgebildet, den Sicherheitsbereich 12 festzulegen. Die Steuerung 10 ermittelt, z.B. durch Triangulation und/oder Bilderkennung, den Abstand von Objekten relativ zu den Kameras 42a, 42b, der Arbeitseinrichtung 6 und/oder dem Werkzeug 20. Insbesondere erkennt die Steuerung 10 auf Basis der durch die Kameras 42a, 42b zur bereitgestellten Informationen, ob sich eine oder mehrere Personen 38 im Arbeitsbereich 4 und/oder im Sicherheitsbereich 12 der Bearbeitungsvorrichtung 1 befinden.

Durch das Datenübertragungskabel 40b überträgt die Steuerung 10 Steuersignale an den Turm 26 zum Steuern der Bearbeitungsvorrichtung 1. Das Datenübertragungskabel 40b überträgt bevorzugt nicht nur Daten von der Steuerung 10 zum Turm 26, sondern auch in umgekehrter Richtung. Bevorzugt sind am Turm 26 Sensoren zum Erfassen von Zustandsinformationen der Arbeitseinrichtung 6 vorgesehen, um beispielsweise eine Achs- und/oder Rotationsgeschwindigkeit, eine Vorschubgeschwindigkeit, Widerstandskraftwerte und/oder weitere Betriebszustände der Arbeitseinrichtung 6 aufzunehmen. Über das Datenübertragungskabel 40b werden diese Informationen der Steuerung 10 bereitgestellt. Alternativ oder ergänzend kann die Steuerung 10 Zustandsinformationen der Arbeitseinrichtung 6 aber auch basierend auf von der Steuerung 10 für die Arbeitseinrichtung 6 bereitgestellten Steuersignalen und/oder Steuerbefehlen generieren.

Die Steuerung 10 ist bevorzugt dazu ausgebildet, den Sicherheitsbereich 12 unter Verwendung von Zustandsinformationen der Arbeitseinrichtung 6 und/oder unter Verwendung von Überwachungseinrichtungsinformationen zu definieren. Etwa kann der Sicherheitsbereich 12 für hohe Geschwindigkeiten einer oder mehrerer Achsen größer sein als für niedrige Geschwindigkeiten. Der Sicherheitsbereich 12 ist demnach nicht zwangsläufig während des gesamten Bearbeitungsvorgangs gleich groß. Bevorzugt ändert die Steuerung 10 seine Form und/oder Größe dynamisch. Wenn etwa Details des Modells 14 von der Bearbeitungsvorrichtung 1 modelliert werden und die Bearbeitungsvorrichtung 1 daher keine schnellen, plötzlichen Bewegungen ausführt, definiert die Steuerung 10 den Sicherheitsbereich 12 bevorzugt kleiner als beim Verfahren mit großen Geschwindigkeiten. Personen 38, insbesondere Bedienpersonal, können dann einen geringeren Sicherheitsabstand zu dem Modell 14 einhalten als in einem Schruppbetrieb, in dem die Bearbeitungsvorrichtung 1 mit hoher Geschwindigkeit verfährt. So kann sich die Person 38 dem Modell 14 nähern und dieses untersuchen, ohne dass ein Sicherheitshalt ausgelöst wird.

Es ist ferner bevorzugt, dass die Bearbeitungsvorrichtung 1 das Modell 14 anhand eines vorbestimmten und vorprogrammierten Programms, z.B. G-Code, bearbeitet. In diesem Fall sind im Programmcode Verfahrpositionen hinterlegt. In einem solchen Fall ist zu jedem Zeitpunkt der Bearbeitung bereits bekannt, welche Positionen die Arbeitseinrichtung 6 nachfolgend einnehmen wird. Es ist besonders bevorzugt, den Sicherheitsbereich 12 an die zukünftigen Positionen und Geschwindigkeiten der Arbeitseinrichtung 6 anzupassen. Zum Beispiel kann vorgesehen sein, dass der Sicherheitsbereich 12 so festgelegt wird, dass er alle Positionen umfasst, die innerhalb einer Zeitspanne, z.B. innerhalb der kommenden Minute angefahren werden.

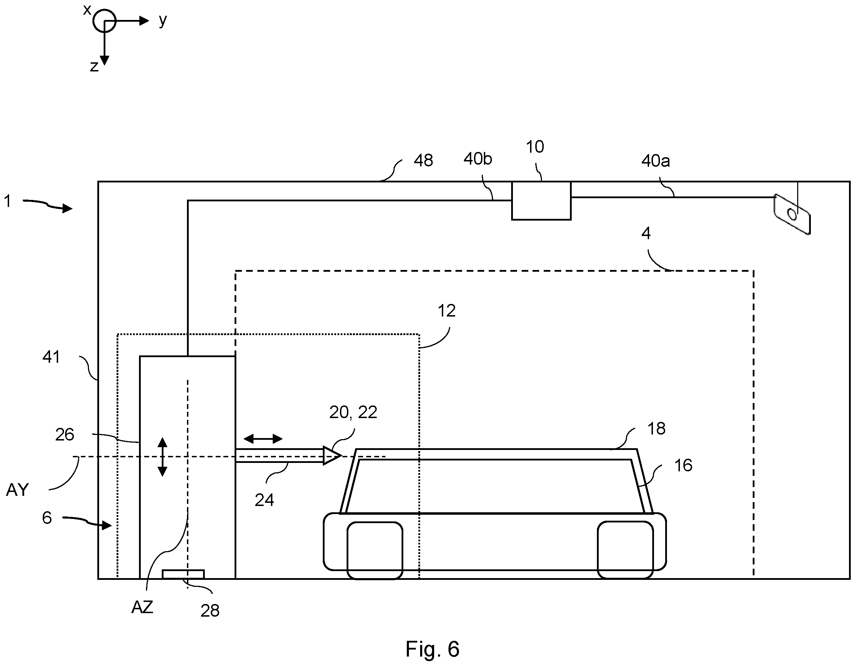

In Figur 6 ist eine Frontalansicht einer Bearbeitungsvorrichtung 1 abgebildet. Die Bearbeitungsvorrichtung 1 befindet sich in der Werkhalle 41. In dem hier gezeigten alternativen Ausführungsbeispiel ist die Überwachungseinrichtung 8 eine stationäre Überwachungseinrichtung 8. Hier ist die Überwachungseinrichtung an der Decke 48 der Werkhalle 41 positioniert. Die Überwachungseinrichtung 8 ist so positioniert, dass der Erfassungsbereich 46, den die Überwachungseinrichtung 8 erfasst, den kompletten Arbeitsbereich 4 einschließt. Die Steuerung 10 ist in der hier gezeigten Ausführungsform ebenfalls an der Decke 48 positioniert und durch Datenübertragungskabel 40a, 40b mit der Überwachungseinrichtung 8 und dem Turm 26 der Arbeitseinrichtung 6 verbunden.

In der in Figur 6 gezeigten Frontalansicht ist der Unterbau 16 des Modells 14, welches hier ein Fahrzeug ist, abgebildet. Oberhalb des Unterbaus 16 ist eine Schicht 18 aus Modelliermasse aufgetragen, welche durch das Werkzeug 20 bearbeitet wird. Hier ist die Modelliermasse sogenannter Clay. An der Führungsschiene 28 ist der Turm 26 translatorisch entlang der ersten Bewegungsachse AX in einer ersten Raumrichtung beweglich (in Figur 6 quer zur Bildebene). In vertikaler Richtung ist der Werkzeugarm 24, welcher an einem distalen Ende das Werkzeug 20, insbesondere Fräswerkzeug 22, trägt, relativ zu dem Turm 26 entlang der dritten Bewegungsachse AZ in einer dritten Raumrichtung Z beweglich. Ferner ist der Werkzeugarm 24 entlang einer zweiten Bewegungsachse AY quer zur ersten Bewegungsachse AX und zur dritten Bewegungsachse AZ in einer zweiten Raumrichtung Y bewegbar.

Wie in Bezug auf Figur 7 beschrieben, ist die Steuerung 10 dazu ausgebildet, den Sicherheitsbereich 12 bevorzugt an das Werkzeug 20 und/oder an aktuelle und/oder nachfolgende Betriebszustände anzupassen. Bevorzugt ist die Bearbeitungsvorrichtung 1 dazu eingerichtet, Personen 38, insbesondere Bedienpersonen, darüber zu informieren, wo sich der Sicherheitsbereich 12 befindet.

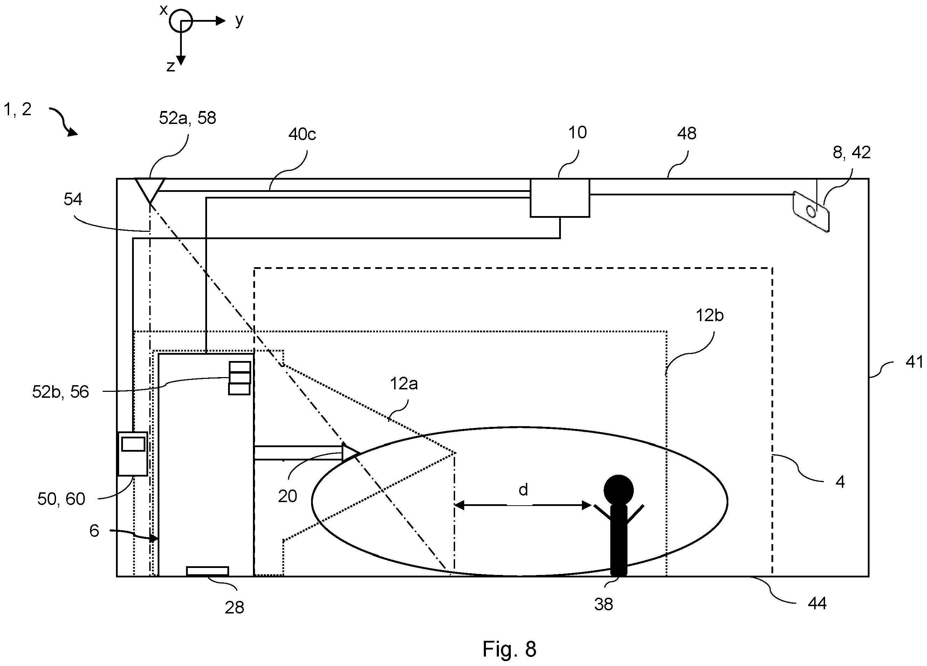

In dem in Figur 8 gezeigten Beispiel passt die Steuerung 10 einen ersten Sicherheitsbereich 12a an das verwendete Werkzeug 20 und an die Position des Werkzeugarms 24 an. In analoger Weise wie zuvor in Hinblick auf Figur 7 beschrieben ist dies in Figur 8 dargestellt, indem die Auskragung des ersten Sicherheitsbereichs 12a eine ähnliche Form wie das Werkzeug 20 annimmt. Wie in Hinblick auf Figur 7 bereits erörtert, muss ein Anpassen des Sicherheitsbereichs 12 aber nicht in Hinblick auf die geometrische Form erfolgen, sondern kann auch Art, Größe, Geschwindigkeit, Temperatur und/oder einen anderen kennzeichnenden Parameter des Werkzeugs 20 berücksichtigen.

In der in Figur 8 gezeigten Ausführungsform umfasst die Bearbeitungsvorrichtung 1 ferner zwei Visualisierungseinrichtungen 52a, 52b. Die erste Visualisierungseinrichtung 52a umfasst in dem hier gezeigten Ausführungsbeispiel eine an der Decke 48 der Werkhalle 41 positionierte und entlang der Decke 48 translatorisch, sowie mit einem Kugelgelenk rotatorisch bewegliche Projektionseinrichtung 58. Die Projektionseinrichtung 58 ist dazu ausgebildet, zumindest eine Grenze eines ersten Sicherheitsbereichs 12a auf den Boden 44 des Arbeitsbereichs 4 oder der Werkhalle 41 zu projizieren. Hierzu emittiert die Visualisierungseinrichtung 52a Lichtstrahlen 54, z.B. Laserstrahlen oder Lichtstrahlen eines Beamers. Die Lichtstrahlen 54 treffen derart am Boden 44 des Arbeitsbereichs 4 auf, dass durch die Lichtstrahlen eine Grenze des ersten Sicherheitsbereichs 12a visualisiert oder die Grenze des ersten Sicherheitsbereichs 12a auf den Boden projiziert wird. Alternativ oder ergänzend kann auch der gesamte Sicherheitsbereich 12a bzw. eine Projektion des Sicherheitsbereichs 12a auf dem Boden 44 ausgeleuchtet werden. Es könnte aber beispielsweise auch vorgesehen sein, dass die Visualisierungseinrichtung 52 im Boden 44 angeordnete Leuchtelemente umfasst.

Die Grenze des ersten Sicherheitsbereichs 12a wird durch die Steuerung 10 definiert. Die erste Visualisierungseinrichtung 52a steht durch das Datenübertragungskabel 40c in Verbindung mit der Steuerung 10 und empfängt Bereichsdaten, die die Grenzen des jeweils aktuellen Sicherheitsbereich 12 repräsentieren. Anhand dieser Informationen bewegt sich die erste Visualisierungseinrichtung 52a und/ oder Komponenten der ersten Visualisierungseinrichtung 52a von der Steuerung 10 gesteuert so, dass die Lichtstrahlen 54 an den Grenzen des Sicherheitsbereichs 12 ausgerichtet werden.

Es soll verstanden werden, dass ein Sicherheitsbereich 12 sich nicht zwangsläufig senkrecht vom Boden 44 nach oben erstreckt, sondern auch andere Formen wie z.B. in Figur 8 für den Sicherheitsbereich 12a abgebildet annehmen kann. In einem solchen Fall ist die erste Visualisierungseinrichtung 52a bevorzugt dazu ausgebildet, eine senkrechte Projektion des Volumens des Sicherheitsbereichs 12a bzw. der Grenze des Volumens des Sicherheitsbereichs 12a auf den Boden 44 zu projizieren.

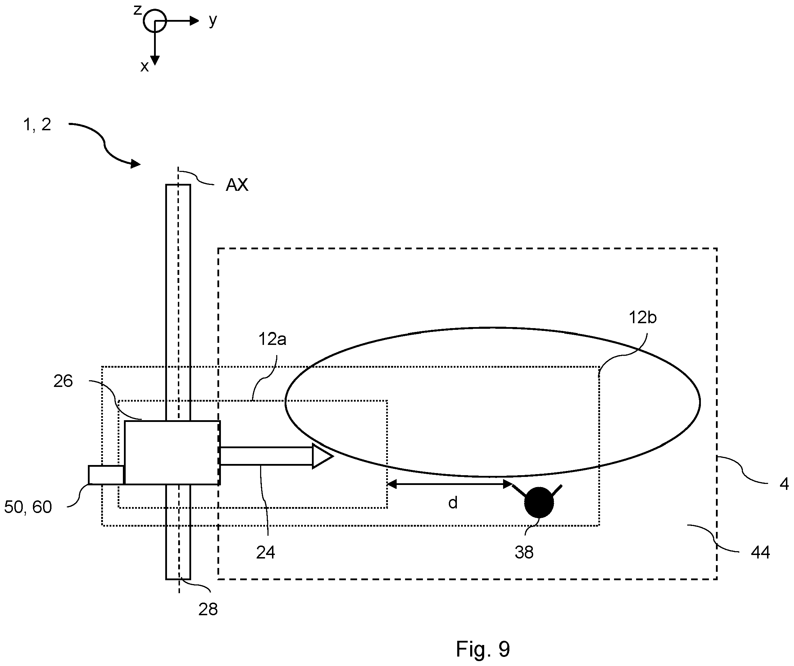

In Figur 8 und Figur 9 sind zwei Sicherheitsbereiche 12a, 12b abgebildet. Der erste Sicherheitsbereich 12a ist kleiner als der zweite Sicherheitsbereich 12b und liegt hier innerhalb des zweiten Sicherheitsbereichs 12b. Der erste Sicherheitsbereich 12a ist bevorzugt ein Bereich um das Werkzeug 20 und oder den Werkzeugarm 24 herum. Verdeutlicht wird dies in der Draufsicht in Figur 9, die die gleiche Ausführungsform in einer schematischen, nicht maßstabsgetreuen Ansicht zeigt. Ein Aufenthalt der Person 38 im ersten Sicherheitsbereich 12a soll im vorliegenden Ausführungsbeispiel aufgrund der Verletzungsgefahr an scharfen und schnell rotierenden Werkzeugen 20 unbedingt vermieden werden. Beim Aufenthalt der Person 38 im ersten Sicherheitsbereich 12a veranlasst die Steuerung 10 deshalb unmittelbar einen Sicherheitshalt der Arbeitseinrichtung 6. Hingegen ist ein Aufenthalt der Person 38 im zweiten Sicherheitsbereich 12b, wie in Figur 9 abgebildet, weniger kritisch. Hier kann die Steuerung 10 zunächst andere Sicherheitsmaßnahmen veranlassen, etwa ein akustisches und/oder optisches Warnen und/oder ein Verlangsamen der Arbeitseinrichtung 6.

In der in Figur 8 gezeigten Ausführungsform ist die Steuerung 10 dazu ausgebildet, einen Sicherheitshalt der Arbeitseinrichtung 6 lediglich dann zu veranlassen, wenn sich die Person 38 im ersten Sicherheitsbereich 12a aufhält. Wenn sich die Person 38 hingegen im zweiten Sicherheitsbereich 12b, aber nicht im ersten Sicherheitsbereich 12a aufhält, ist die Steuerung 10 dazu ausgebildet, die Geschwindigkeit der Arbeitseinrichtung 6 zu limitieren, bevorzugt auf einen vorbestimmten Wert.

Vorzugsweise wird zusätzlich von der zweiten Visualisierungseinrichtung 52b, welche in Figur 8 eine Signalsäule 56 ist, eine erste Warnung angezeigt. Bevorzugt ist die Signalsäule 56 dazu ausgebildet, eine der Ampelfarben rot, gelb oder grün zu zeigen. Die Signalsäule 56 leuchtet grün, wenn sich keine Person 38 im ersten oder zweiten Sicherheitsbereich 12a, 12b aufhält. Hält sich eine Person 38 im ersten Sicherheitsbereich 12a auf, leuchtet die Signalsäule rot und es erfolgt ein Sicherheitshalt. Im in Figur 8 abgebildeten Fall, in dem eine Person 38 nicht im ersten Sicherheitsbereich 12a, aber im zweiten Sicherheitsbereich 12b ermittelt wird, leuchtet die Signalsäule 56 gelb. Zusätzlich oder alternativ erfolgt ein akustisches Warnsignal, etwa ein Piepen, eine Durchsage, ein Sirenengeräusch oder dergleichen. Das akustische Warnsignal erfolgt besonders bevorzugt in Abstufungen, z.B. lauter oder leiser und/oder in höherer oder niedrigerer Frequenz, jeweils in

Abhängigkeit davon, ob in keinem Sicherheitsbereich 12, nur im zweiten Sicherheitsbereich 12b oder auch im ersten Sicherheitsbereich 12a ein Person 38 registriert wurde. In Figur 8 ist eine akustische Warneinheit 60 direkt an der Bedieneinheit 50 vorgesehen. Es kann aber auch vorgesehen sein, dass die akustische Warneinheit 60 an einer anderen Stelle der Werkhalle 41 angebracht ist. Zum Beispiel kann die akustische Warneinheit 60 an der Decke oder an der Spitze des Turms 26 positioniert sein. Die akustische Warneinheit 60 kann in unmittelbarer Nähe zu einer Visualisierungseinrichtung 52 angebracht sein. Es können auch mehrere akustische Warneinheiten 60 vorgesehen sein, sodass beispielsweise eine akustische Warneinheit einen Piepton erzeugt und eine andere akustische Warneinheit einen gesprochenen Hinweis ausgibt.

Besonders bevorzugt erfasst die Überwachungseinrichtung 8 einen Abstand d (vgl. Figur 9) einer im zweiten Sicherheitsbereich 12b befindlichen Person 38 zur Grenze des ersten Sicherheitsbereichs 12a. Die Steuerung 10 ist bevorzugt dazu ausgebildet, anhand dieses Abstands d eine Geschwindigkeit der Arbeitseinrichtung 6 zu steuern, insbesondere zu verlangsamen, wenn der Abstand d kleiner wird. Vorzugsweise kann die Steuerung 10 eine erste Vorschubgeschwindigkeit der Arbeitseinrichtung 6 entlang der ersten Bewegungsachse AX, eine zweite Vorschubgeschwindigkeit der Arbeitseinrichtung 6 entlang der zweiten Bewegungsachse AY und/oder eine dritte Vorschubgeschwindigkeit der Arbeitseinrichtung 6 entlang der dritten Bewegungsachse AZ limitieren.

Besonders bevorzugt ist die Steuerung 10 dazu ausgebildet, die Geschwindigkeit der Arbeitseinrichtung 6 umgekehrt proportional zum Abstand d anzupassen. So limitiert die Steuerung 10 im gezeigten Ausführungsbeispiel die erste Vorschubgeschwindigkeit der Arbeitseinrichtung 6 ausgehend von einem Startwert umso stärker, je weiter sich die Person 38 dem ersten Sicherheitsbereich 12a nähert bzw. je geringer der Abstand d wird.

Weiter bevorzugt ist die Steuerung 10 dazu ausgebildet, die Geschwindigkeit der Arbeitseinrichtung 6 wieder zu erhöhen und/oder eine Limitierung der Geschwindigkeit zurückzunehmen, wenn der Abstand d zunimmt. Vorzugsweise ist die Steuerung 10 dazu ausgebildet, nach einem Sicherheitshalt ein erneutes Wiederanlaufen der Arbeitseinrichtung 6 zu veranlassen, sofern sich keine Person 38 mehr im ersten Sicherheitsbereich 12a aufhält. Es ist auch bevorzugt, dass die Geschwindigkeit der Arbeitseinrichtung 6 erst dann wieder zunimmt, wenn keine Person 38 mehr im zweiten Sicherheitsbereich 12b erfasst wird und/oder an einer Bedieneinheit 50 der Arbeitseinrichtung 6 eine Freigabe durch eine Person 38 erfolgt. Vorteilhafterweise wird durch ein solches zusätzliches Freigabeerfordernis sichergestellt, dass ein mögliches fehlerhaftes Erfassen eines Austritts einer Person 38 aus dem zweiten Sicherheitsbereich 12b durch die Überwachungseinrichtung 8 nicht zu einem Beschleunigen von Maschinenkomponenten führt.

Die Überwachungseinrichtung 8 kann dazu ausgebildet sein, Personen 38 im Arbeitsbereich anhand zusätzlicher Sicherheitsmodule, etwa RFID- Sensoren oder dergleichen, zu identifizieren. Besonders bevorzugt erfolgt das Erkennen von Personen 38 ohne derartige Sicherheitsmodule und/oder gestützt auf Bilderkennungsmethoden. Das ist besonders sicher, weil nicht z.B. durch fehlerhaftes Anbringen von Sensorik oder durch defekte RFID - Sensorik eine Person 38 im Sicherheitsbereich 12 unerkannt bleibt. Zudem ist das System einfacher in der Anwendung und kann die Akzeptanz auf Seiten der Benutzer erhöhen.

Besonders bevorzugt erfolgt das Erkennen von Personen 38 basierend auf künstlicher Intelligenz. Beispielsweise können beim Einrichten der Bearbeitungsvorrichtung 1 Personen 38 verschiedene Positionen im Raum, z.B. in der Werkhalle 41 einnehmen, die von der Überwachungseinrichtung 8, insbesondere Kamera 42, erfasst werden. Zu jeder Position erfolgt dann z.B. eine Bedienereingabe, ob sich eine Person 38 im Arbeitsbereich 4 und/oder in einem bestimmten Abstand zur Arbeitseinrichtung 6 aufhält oder nicht. Diese möglichst verschiedenen Szenarien und die jeweilige Bedienereingabe dienen bevorzugt als Basis für die Bearbeitungsvorrichtung 1, um ein zuverlässiges Erkennen von Personen 38 zu erlernen.

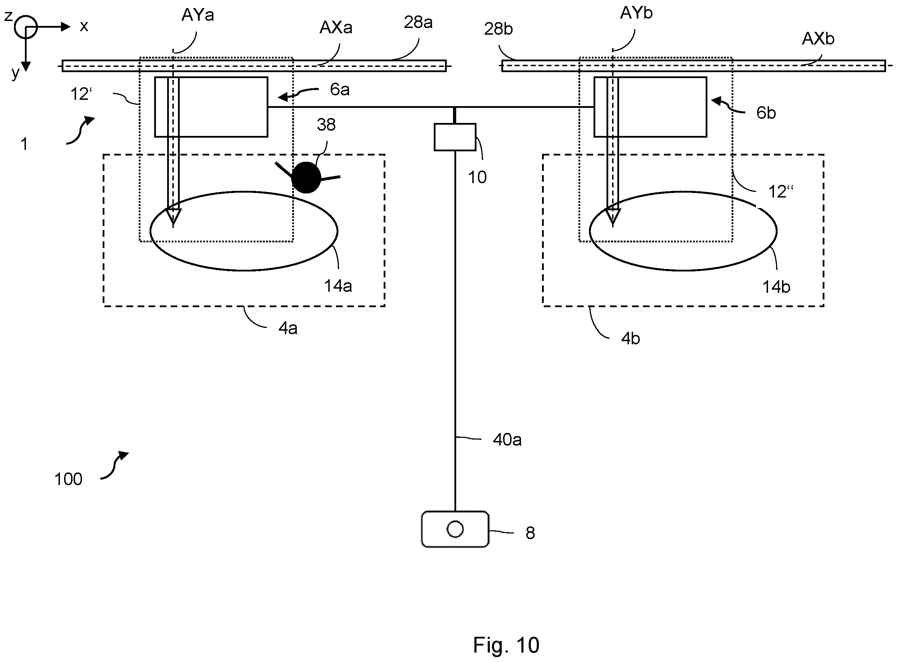

Figur 10 zeigt gemäß dem zweiten Aspekt der Erfindung ein Bearbeitungssystem 100 mit wenigstens einer Bearbeitungsvorrichtung 1 und einer zweiten Arbeitseinrichtung 6b neben einer ersten Arbeitseinrichtung 6a. Beide Arbeitseinrichtungen 6a, 6b weisen einen eigenen Arbeitsbereich 4, nämlich einen ersten Arbeitsbereich 4a, bzw. einen zweiten Arbeitsbereich 4b auf und sind entlang erster Führungsschienen 28a, bzw. zweiter Führungsschienen 28b, unabhängig voneinander bewegbar entlang jeweiliger Bewegungsachsen AXa bzw. AXb. Entlang entsprechender Linearführungen sind die Werkzeugarme 24 der jeweiligen Arbeitseinrichtungen 6a, 6b entlang der Bewegungsachsen AYa bzw. AYb beweglich. Hier sind die Bewegungsachsen AYa und AYb parallel zueinander und die Bewegungsachsen AXa bzw. AXb fluchtend abgebildet; es kann aber auch vorgesehen sein, dass die Arbeitseinrichtung 6b gegenüber der Arbeitseinrichtung 6a gedreht ist oder ihr gegenüber in der Werkshalle 41 angeordnet ist. Jeweilige, auf die Arbeitseinrichtung bezogene Bewegungsachsen können also auch unabhängig voneinander sein oder in einem bekannten Verhältnis zueinanderstehen.

In dem hier gezeigten Ausführungsbeispiel werden beide Arbeitseinrichtungen 6a, 6b von einer Steuerung 10 gesteuert, welche von einer Überwachungseinrichtung 8 Daten über ein Datenübertragungskabel 40a empfängt. Es kann aber auch vorgesehen sein, dass jede Arbeitseinrichtung 6a, 6b eine eigene Steuerung 10 aufweist. Jede Arbeitseinrichtung 6a, 6b bearbeitet hier jeweils ein Modell 14a, bzw. 14b. Es kann aber auch vorgesehen sein, dass mehrere Arbeitseinrichtungen 6a, 6b ein gemeinsames Modell 14 bearbeiten. Die Steuerung 10 ist dazu ausgebildet, anhand der Informationen, die die Überwachungseinrichtung 8 bereitstellt, wenigstens einen Sicherheitsbereich 12', bzw. 12" pro Arbeitseinrichtung 6a, bzw. 6b zu definieren. In dem in Figur 10. gezeigten Zustand befindet sich eine Person 38 zumindest teilweise im Sicherheitsbereich 12' der ersten Arbeitseinrichtung 6a. Im Sicherheitsbereich 12" der zweiten Arbeitseinrichtung 6b befindet sich keine Person. In diesem Zustand erfolgt ein Sicherheitshalt lediglich der ersten Arbeitseinrichtung 6a, während die zweite Arbeitseinrichtung 6b unverändert das Modell 14b bearbeitet.

### Bezugszeichenliste

- 1: Bearbeitungsvorrichtung
- 2: Fräsmaschine
- 4: Arbeitsbereich
- 4a: erster Arbeitsbereich
- 4b: zweiter Arbeitsbereich
- 6: Arbeitseinrichtung
- 6a: erste Arbeitseinrichtung
- 6b: zweite Arbeitseinrichtung
- 8: Überwachungseinrichtung
- 10: Steuerung
- 12: Sicherheitsbereich
- 12a: erster Sicherheitsbereich
- 12b: zweiter Sicherheitsbereich
- 12`: Sicherheitsbereich der ersten Arbeitseinrichtung
- 12": Sicherheitsbereich der zweiten Arbeitseinrichtung
- 14: Modell
- 14a: erstes Modell
- 14b: zweites Modell
- 16: Unterbau
- 18: Schicht
- 20: Werkzeug
- 22: Fräswerkzeug
- 24: Werkzeugarm
- 26: Turm
- 28: Führungsschiene
- 28a: erste Führungsschiene
- 28b: zweite Führungsschiene
- 32: Gelenk
- 38: Person
- 40a: Datenübertragungskabel
- 40b: Datenübertragungskabel
- 40d: Datenübertragungskabel
- 41: Werkhalle
- 42: Kamera
- 42a: erste Kamera
- 42b: zweite Kamera
- 44: Boden
- 46: Erfassungsbereich
- 46a: erster Erfassungsbereich
- 46b: zweiter Erfassungsbereich
- 48: Decke
- 50: Bedieneinheit
- 52: Visualisierungseinrichtung
- 52a: erste Visualisierungseinrichtung
- 52b: zweite Visualisierungseinrichtung
- 54: Lichtstrahlen
- 56: Signalsäule
- 58: Projektionseinrichtung
- 60: akustische Warneinrichtung
- 100: Bearbeitungssystem
- AX: erste Bewegungsachse
- AY: zweite Bewegungsachse
- AZ: dritte Bewegungsachse
- AXa: erste Bewegungsachse eines ersten Bearbeitungssystems
- AXb: erste Bewegungsachse eines zweiten Bearbeitungssystems
- AYa: zweite Bewegungsachse eines ersten Bearbeitungssystems
- AYb: zweite Bewegungsachse eines zweiten Bearbeitungssystems
- X: erste Raumrichtung
- Y: zweite Raumrichtung
- Z: dritte Raumrichtung

## Patentansprüche

1. Bearbeitungsvorrichtung (1), insbesondere Fräsmaschine (2), zur Erstellung, Erkennung und/oder Bearbeitung von Modellen (14), die Bearbeitungsvorrichtung (1) aufweisend:
einen Arbeitsbereich (4), in dem zumindest ein zu bearbeitendes Modell (14) angeordnet werden und/oder in dem ein Modell (14) aufgebaut werden kann, wobei der Arbeitsbereich (4) zumindest in einem Abschnitt barrierefrei von außen zugänglich ist;
zumindest eine Arbeitseinrichtung (6) zum Bearbeiten des Modells (14), zum Erkennen des Modells (14) und/oder zum Aufbauen des Modells (14) mittels eines Werkzeugs (20), wobei die Arbeitseinrichtung (6) dazu ausgebildet ist, sich zumindest abschnittsweise durch den Arbeitsbereich zu bewegen,
eine Überwachungseinrichtung (8) zum Überwachen des Arbeitsbereichs (4), und
eine Steuerung (10), wobei die Steuerung (10) dazu ausgebildet ist,
unter Verwendung der Überwachungseinrichtung (8) im Arbeitsbereich (4) befindliche Personen (38) zu erkennen,
zumindest einen ersten Sicherheitsbereich (12a) um zumindest einen Abschnitt der Arbeitseinrichtung (6) herum zu definieren, und
einen Sicherheitshalt der Arbeitseinrichtung (6) zu veranlassen, falls sich eine Person (38) im ersten Sicherheitsbereich (12a) befindet.

2. Bearbeitungsvorrichtung (1) nach Anspruch 1, wobei die Arbeitseinrichtung (6) mehrachsig entlang einer ersten Bewegungsachse (AX) und entlang einer zweiten Bewegungsachse (AY) durch den Arbeitsbereich (4) bewegbar ist.

3. Bearbeitungsvorrichtung (1) nach Anspruch 1 oder 2, wobei die Überwachungseinrichtung (8) eine dynamische Überwachungseinrichtung (8) ist, die vorzugsweise dazu ausgebildet ist, sich gleichlaufend mit der Arbeitseinrichtung (6) zu bewegen.

4. Bearbeitungsvorrichtung (1) nach einem der vorstehenden Ansprüche, wobei die Arbeitseinrichtung (6) einen Turm (26) aufweist, der das zum Bearbeiten, Erkennen und/oder Aufbauen des Modells (14) vorgesehene Werkzeug (20) zumindest mittelbar trägt,
wobei die Überwachungseinrichtung (8) vorzugsweise an dem Turm (26), besonders bevorzugt an einer Spitze des Turms (26), angeordnet ist.

5. Bearbeitungsvorrichtung (1) nach einem der vorstehenden Ansprüche 1 oder 2, wobei die Überwachungseinrichtung (8) dazu vorgesehen ist, stationär montiert zu werden und vorzugsweise den gesamten Arbeitsbereich (4) abzudecken.

6. Bearbeitungsvorrichtung (1) nach einem der vorstehenden Ansprüche, wobei die Überwachungseinrichtung (8) zumindest eine Kamera (42) umfasst.

7. Bearbeitungsvorrichtung (1) nach Anspruch 6, wobei die Überwachungseinrichtung (8) zumindest zwei Kameras (42a, 42b) mit überlappenden Erfassungsbereichen (46a, 46b) aufweist,
wobei die Kameras (42a, 42b) vorzugsweise dazu ausgebildet sind, die Arbeitseinrichtung (6) vollumfänglich zu überwachen und/oder den Arbeitsbereich (4) vollständig zu erfassen.

8. Bearbeitungsvorrichtung (1) nach einem der vorstehenden Ansprüche, wobei die Steuerung (10) dazu ausgebildet ist, die geometrische Konfiguration des ersten Sicherheitsbereichs (12a) frei zu definieren und insbesondere an das Werkzeug (20) anzupassen, und/oder
wobei die Steuerung (10) dazu ausgebildet ist, die geometrische Konfiguration des Sicherheitsbereichs (12a), insbesondere die Größe des Sicherheitsbereichs (12a), im Betrieb an zumindest einen Parameter der Arbeitseinrichtung (6), vorzugsweise eine Vorschubgeschwindigkeit der Arbeitseinrichtung (6), anzupassen.

9. Bearbeitungsvorrichtung (1) nach einem der vorstehenden Ansprüche, wobei die Steuerung (10) dazu ausgebildet ist, einen zweiten Sicherheitsbereich (12b) zu definieren, der größer ist als der erste Sicherheitsbereich (12a).

10. Bearbeitungsvorrichtung (1) nach Anspruch 9, wobei die Steuerung (10) dazu ausgebildet ist, eine Vorschubgeschwindigkeit der Arbeitseinrichtung (6) zu limitieren, falls sich eine Person (38) im zweiten Sicherheitsbereich (12b) und außerhalb des ersten Sicherheitsbereichs (12a) befindet, und
wobei die Steuerung (10) vorzugsweise dazu ausgebildet ist, einen Abstand (d) einer im zweiten Sicherheitsbereich (12b) befindlichen Person (38) zu einer Grenze des ersten Sicherheitsbereichs (12a) zu ermitteln, und die Vorschubgeschwindigkeit der Arbeitseinrichtung (6) dynamisch, insbesondere umgekehrt proportional, an den ermittelten Abstand (d) anzupassen.

11. Bearbeitungsvorrichtung (1) nach einem der vorstehenden Ansprüche, ferner aufweisend eine Visualisierungseinrichtung (52) zum Visualisieren zumindest eines Sicherheitsbereichs (12)
wobei die Visualisierungseinrichtung (52) vorzugsweise zumindest eine Projektionseinrichtung (58) umfasst, die dazu ausgebildet ist, zumindest eine Grenze eines Sicherheitsbereichs (12) auf den Boden (44) des Arbeitsbereichs (4) zu projizieren,
wobei die Projektionseinrichtung (52) vorzugsweise einen Laser und/oder einen Beamer umfasst, und/oder wobei die Bearbeitungsvorrichtung (1) vorzugsweise dazu ausgebildet ist, unter Verwendung der Visualisierungseinrichtung (52) ein optisches Warnsignal auszugeben, falls eine Person (38) in einem Sicherheitsbereich (12) detektiert wird.

12. Bearbeitungsvorrichtung (1) nach einem der vorstehenden Ansprüche, wobei die Personenerkennung KI gestützt erfolgt.

13. Bearbeitungsvorrichtung (1) nach einem der vorstehenden Ansprüche, wobei die Steuerung (10) dazu ausgebildet ist, einen automatischen Wiederanlauf der Arbeitseinrichtung (6) zu veranlassen, falls sich nach einem Sicherheitshalt keine Personen (38) mehr im ersten Sicherheitsbereich (12a) befindet,
wobei die Steuerung (10) vorzugsweise dazu ausgebildet ist, den Wiederanlauf der Arbeitseinrichtung (6) nur dann zu veranlassen, wenn die Person (38), die den Sicherheitshalt verursacht hat, den ersten Sicherheitsbereich (12) verlassen hat und keine weiteren Personen im ersten Sicherheitsbereich (12a) ermittelt werden.

14. Bearbeitungssystem (100), aufweisend zumindest eine Bearbeitungsvorrichtung (1) nach einem der Ansprüche 1 bis 13 und zumindest eine zweite Arbeitseinrichtung (6b) zum Bearbeiten, Aufbauen und/oder Scannen eines Modells (14b) in dem ersten Arbeitsbereich (4) und/oder in einem zweiten Arbeitsbereich (4b),
wobei die Überwachungseinrichtung (8) der Bearbeitungsvorrichtung (1) dazu ausgebildet ist,
den ersten Arbeitsbereich (4) zu überwachen und die zweite Arbeitseinrichtung (6b) zu stoppen, falls ein Abstand zwischen einer Person (38) und der zweiten Arbeitseinrichtung (6b) einen Grenzwert unterschreitet, und/oder
den zweiten Arbeitsbereich (4b) zu überwachen und die zweite Arbeitseinrichtung (6b) zu stoppen, falls ein Abstand (d) zwischen einer Person (38) und der zweiten Arbeitseinrichtung (6b) einen Grenzwert unterschreitet.

15. Überwachungssystem für eine Bearbeitungsvorrichtung (1),
die Bearbeitungsvorrichtung (1) aufweisend
einen Arbeitsbereich (4) in dem zumindest ein zu bearbeitendes Modell (14) angeordnet werden und/oder in dem ein Modell (14) aufgebaut werden kann, wobei der Arbeitsbereich (4) barrierefrei und zumindest in einem Abschnitt von außen zugänglich ist; und
zumindest eine Arbeitseinrichtung (6) zum Bearbeiten des Modells (14) mittels eines Werkzeugs (20), zum Erkennen des Modells (14) und/oder zum Aufbauen des Modells (14) mittels eines Werkzeugs (20), wobei die Arbeitseinrichtung (6) dazu ausgebildet ist, sich zumindest abschnittsweise durch den Arbeitsbereich (4) zu bewegen,
wobei das Überwachungssystem eine Überwachungseinrichtung (8) zum Überwachen des Arbeitsbereichs (4), und eine Steuerung (10) aufweist, die mit einer Maschinensteuerung der Bearbeitungsvorrichtung (1) verbindbar ist; wobei die Steuerung (10) dazu ausgebildet ist,
unter Verwendung der Überwachungseinrichtung (8) im Arbeitsbereich (4) befindliche Personen (38) zu erkennen,
zumindest einen ersten Sicherheitsbereich (12a) um zumindest einen Abschnitt der Arbeitseinrichtung (6) zu definieren, und
einen Sicherheitshalt der Arbeitseinrichtung (6) zu veranlassen, falls sich eine Person (38) im ersten Sicherheitsbereich (12a) befindet.
